# EUROPEAN PATENT APPLICATION

(11) **EP 2 451 167 A1**
(43) Date of publication of application: **09.05.2012**
(21) Application number: 10794023.1
(22) Date of filing: 22.06.2010
(51) Int. Cl.: H04N 13/00, H04N 7/173, H04N 7/26

(54) **STEREOSCOPIC IMAGE DATA TRANSMITTER, METHOD FOR TRANSMITTING STEREOSCOPIC IMAGE DATA, AND STEREOSCOPIC IMAGE DATA RECEIVER**

(30) Priority: 29.06.2009 JP 2009153686; 27.10.2009 JP 2009246179
(71) Applicant: Sony Corporation, Tokyo 108-0075 (JP)
(72) Inventor: TSUKAGOSHI, Ikuo, Tokyo 108-0075 (JP)
(74) Representative: Thévenet, Jean-Bruno
(86) International application number: PCT/JP2010/060581
(87) International publication number: WO 2011/001853

(57) **Abstract**

[Object] To maintain consistency of perspective between objects in an image in closed caption display and so forth.

[Solution] A video framing unit 112 changes left eye image data and right eye image, data to a state corresponding to a transmission method, and obtains transmission stereoscopic image data. A CC encoder z.27 outputs closed caption data (CC data). A Z data unit 128 outputs disparity information correlated with each of data of superimposing information such as closed caption information. This correlation is performed using Region_id. The CC data and disparity information is sent to a stream formatter 113a of a video encoder 113, so as to be embedded in a video stream as user data and transmitted. At the reception side, superimposing information subjected to disparity adjustment according to the perspective of the objects within the image can be used as the same superimposing information (closed caption information, etc.) as that superimposed on the left eye image and right eye image.

## Description

### Technical Field

The present invention relates to stereoscopic image data transmission device, a stereoscopic image data transmission method, and a stereoscopic image data reception method, and particularly relates to a stereoscopic image data transmission device and the like capable of suitably performing display of superimposed information such as closed-caption information, subtitle information, graphics information, text information, and so forth.

### Background Art

For example, a transmission method using television broadcast airwaves for stereoscopic image data is proposed in PTL 1. In this case, stereoscopic image data including image data for the left eye and image data for the right eye is transmitted, and stereoscopic image display is performed at a television receiver using binocular disparity.

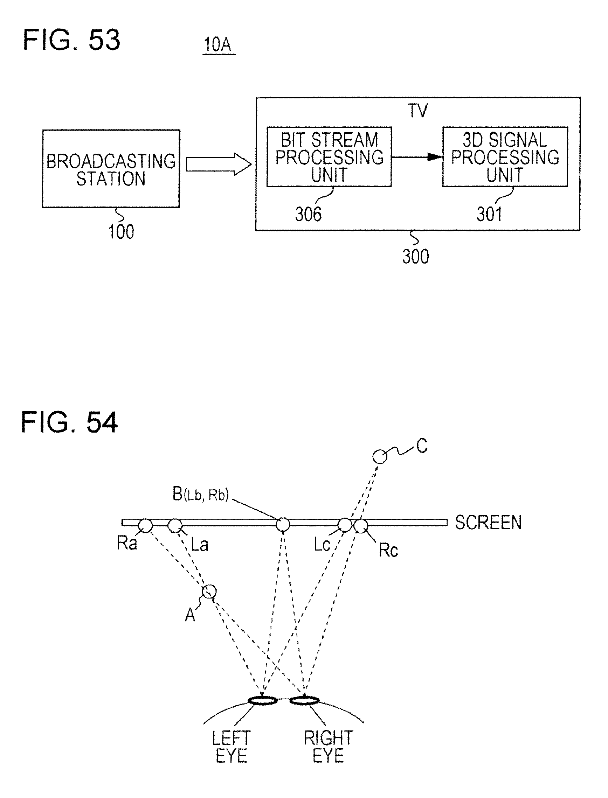

Fig. 54 illustrates the relation of display position of the left and right images of an object (object) on the screen, and the playing position of the stereoscopic image, on a stereoscopic image display using binocular disparity. For example, with an object A which is displayed with a left image La displayed shifted to the right side and a right image Ra shifted to the left side, the left and right lines of view intersect at the near side of the screen plane, so the playing position of the stereoscopic image is at the near side of the screen plane.

Also, for example, with an object B which is displayed with a left image Lb and a right image Rb displayed at the same position, the left and right lines of view intersect at the screen plane, so the playing position of the stereoscopic image is at the screen plane. Further, for example, with an object C which is displayed with a left image Lc displayed shifted to the left side and a right image Rc shifted to the right side, the left and right lines of view intersect at the far side of the screen plane, so the playing position of the stereoscopic image is at the far side of the screen plane.

### Citation List

### Patent Literature

PTL 1: Japanese Unexamined Patent Application Publication No. 2005-6114

### Summary of Invention

### Technical Problem

As described above, with stereoscopic image display, a viewer usually recognizes the perspective of a stereoscopic image by taking advantage of binocular disparity. There is expectation that superimposing information to be superimposed on an image, for example, such as closed caption information, subtitle information, graphics information, text information, and so forth, will also be subjected to rendering in conjunction with stereoscopic image display as not only two-dimensional spatial sense but also three-dimensional depth perception.

For example, in the event that subtitles that are closed caption information or subtitle information are subjected to superimposing display (overlay display), unless the subtitles are displayed in front of the nearest object within an image as used in the field of perspective, the viewer may sense conflict of perspective. Also, in the even that another graphics information or text information is displayed on an image in a superimposed manner as well, it has also been expected to subject this to disparity adjustment according to the perspective of each object within the image, and to maintain the consistency of perspective.

The object of the present invention is to realize maintenance of consistency of perspective between objects within an image regarding display of superimposing information such as closed caption information, subtitle information, graphics information, text information, and so forth.

### Solution to Problem

A concept of the present invention is a stereoscopic image data transmission device including:
an encoding unit configured to perform encoding as to stereoscopic image data including left eye image data and right eye image data, so as to obtain encoded video data;
a superimposing information data generating unit configured to generate data of superimposing information to be superimposed on the image of the left eye image data and right eye image data;
a disparity information output unit configured to output disparity information to provide disparity to the superimposing information to be superimposed on the image of the left eye image data and right eye image data; and
a transmission unit configured to transmit the encoded video data obtained from the encoding unit, the superimposing information data generated at the superimposing information data generating unit, and the disparity information output from the disparity information output unit.

With this invention, encoding is performed by the encoding unit so that stereoscopic image data including left eye image data and right eye image data is encoded and encoded video data is obtained. For example, encoding according to an encoding method such as MPEG2, H,264 AVC, or VC-1 or the like, is performed on the stereoscopic image data including left eye image data and right eye image data by the encoding unit.

Also, data of superimposing information to be superimposed on an image of left eye image data and right eye image data is generated at the superimposing information data generating unit. Note that superimposing information means information to be displayed superimposed on an image, such as closed caption information for displaying subtitles, subtitle information, graphics information for displaying graphics such as logos and the like, electronic program guides (EPG: Electronic Program Guide), text information for displaying teletext broadcasting, and so forth.

Also, disparity information to provide disparity to the superimposing information to be superimposed on the image of the left eye image data and right eye image data is output by the disparity information output unit. For example, an identifier is added to each superimposing information data generated at the superimposing information data generating unit, and the disparity information of each superimposing information data output from the superimposing information data generating unit has added thereto an identifier corresponding to the identifier provided to the corresponding superimposing information data. By thus adding identifiers to each of the superimposing information data and disparity information, the superimposing information data and disparity information can be correlated. Here, the term, identifier corresponding to, means the same identifier or a correlated identifier.

For example, disparity information output unit includes a disparity information determining unit to determine the disparity information in accordance with the content of the image of the left eye image data and the right eye image data, for each superimposing information data generated at the superimposing information data generating unit, and outputs the disparity information determined at the disparity information determining unit. In this case, for example, the disparity information determining unit includes a disparity information detecting unit configured to detect disparity information of one of the left eye image and right eye image as to the other at a plurality of positions within the image, based on the left eye image data and the right eye image data, and determines, of the plurality of disparity information detected at the disparity information detecting unit, the disparity information detected at a detecting position corresponding to a superimposing position, for each the superimposing information.

Also, for example, the disparity information output unit includes a disparity information setting unit configured to set the disparity information of each superimposing data generated at the superimposing data generating unit, and outputs disparity information set at the disparity information setting unit. At the disparity information setting unit, setting of disparity information is set for each superimposing data, by predetermined program processing, or manual operations by a user, for example. For example, different disparity information is set according to the superimposing position, or common disparity information is set regardless of superimposing position, or disparity information is set which differs depending on the type of superimposing information. Now, the type of superimposing information is, for example, types such as closed caption information, subtitle information, graphics information, text information, and so forth. Also, the type of superimposing is, for example, types classified by superimposing position, duration of superimposing time, and so forth.

Also, for example, the disparity information output unit includes a disparity information determining unit configured to determine the disparity information in accordance with the content of the image of the left eye image data and the right eye image data, for each superimposing information data generated at the superimposing information data generating unit, and a disparity information setting unit configured to set the disparity information of each superimposing data generated at the superimposing data generating unit, with the disparity information determined at the disparity information determining unit and the disparity information determined at the disparity information setting unit being selectively output.

Also, the transmission unit transmits the encoded video data obtained from the encoding unit, the superimposing information data generated at the superimposing information data generating unit, and the disparity information output from the disparity information output unit. For example, the disparity information output from the disparity information output unit is included in a user data region of a header portion of a video elementary stream which includes the encoded video data obtained at the encoding unit in a payload portion. Also, for example, one or both of information indicating the superimposition position of the superimposing information and information indicating display time of the superimposing information is added to the disparity information, and transmitted. Adding information indicating the superimposing position and display time to the disparity information and transmitting thus means that these information do not have to be added to the superimposing information data and transmitted, for example.

Thus, with the present invention, superimposing information data and disparity information is transmitted along with encoded video data obtained by encoding stereoscopic image data including left eye image data and right eye image data. Accordingly, at the receiving side, superimposing information subjected to disparity adjustment according to the perspective of the objects within the image can be used as the same superimposing information (closed caption information, subtitle information, graphics information, text information, etc.) as that superimposed on the left eye image and right eye image, and consistency of perspective can be maintained between the objects in the image in the display of superimposing information.

Also, a concept of the present invention is a stereoscopic image data reception device including:
a reception unit configured to receive encoded video data obtained by encoding stereoscopic image data including left eye image data and right eye image data, data of superimposing information to be superimposed on an image of the left eye image data and right eye image data, and disparity information for providing disparity to the superimposing information to be superimposed on an image of the left eye image data and right eye image data;
a decoding unit configured to perform decoding to the encoded video data received at the reception unit so as to obtain the stereoscopic image data;
and an image data processing unit configured to provide disparity to the same superimposing information as that of the superimposing information data received at the reception unit to be superimposed on an image of the left eye image data and right eye image data, included in the stereoscopic image data obtained at the decoding unit, based on the disparity information received at the reception unit, thereby obtaining data of the left eye image upon which the superimposing information has been superimposed and data of the right eye image upon which the superimposing information has been superimposed.

With the present invention, superimposing data and disparity information is transmitted along with encoded video data obtained by encoding stereoscopic image data including left eye image data and right eye image data. The decoding unit decodes the encoded video data received at the reception unit so as to obtain the stereoscopic image data including the left eye image data and right eye image data.

Also, the image data processing unit obtains data of the left eye image with superimposing information superimposed and data of the right eye image with superimposing information superimposed, based on the left eye image data included in the stereoscopic image data obtained at the decoding unit and the superimposing information data received at the reception unit. In this case, disparity is provided to the superimposing image to be superimposed on the image of the left eye image data and right eye image data, based on the disparity information received at the reception unit. Accordingly, consistency of perspective can be maintained between the objects in the image in the display of superimposing information such as closed caption information, subtitle information, graphics information, text information, and so forth.

### Advantageous Effects of Invention

According to the present invention, at the receiving side of stereoscopic image data, superimposing information subjected to disparity adjustment according to the perspective of the objects within the image can be used as the same superimposing information as that superimposed on the left eye image and right eye image, and consistency of perspective can be maintained between the objects in the image in the display of superimposing information such as closed caption information, subtitle information, graphics information, text information, and so forth.

### Brief Description of Drawings

[Fig. 1] Fig. 1 is a block diagram illustrating a configuration example of a stereoscopic image display system serving as an embodiment of the present invention.
[Fig. 2] Fig. 2 is a block diagram illustrating a configuration example of a transmission data generating unit in a broadcasting station.
[Fig. 3] Fig. 3 is a diagram illustrating image data in a pixel format of 1920 x 1080 P.
[Fig. 4] Fig. 4 is a diagram for describing a "Top & Bottom" method, a "Side By Side" method, and a "Frame Sequential" method that are stereoscopic image data (3D image data) transmission methods.
[Fig. 5] Fig. 5 is a diagram for describing an example to detect the disparity vector of a right eye image corresponding to a left eye image.
[Fig. 6] Fig. 6 is a diagram for describing obtaining a disparity vector using a block matching method.
[Fig. 7] Fig. 7 is a diagram illustrating an example of a disparity vector VV in a predetermined position within an image, to be detected at a disparity vector detecting unit.
[Fig. 8] Fig. 8 is a diagram illustrating the transmission content of a disparity vector.
[Fig. 9] Fig. 9 is a diagram illustrating a disparity detection block example, and the transmission content of a disparity vector in this case.
[Fig. 10] Fig. 10 is a diagram describing an example of timing for detecting and transmitting a disparity vector.
[Fig. 11] Fig. 11 is a diagram describing an example of timing for detecting and transmitting a disparity vector.
[Fig. 12] Fig. 12 is a diagram illustrating a stream example of each data to be multiplexed at the transmission data generating unit.
[Fig. 13] Fig. 13 is a block diagram illustrating another configuration example of the transmission data generating unit in the broadcasting station.
[Fig. 14] Fig. 14 is a diagram for describing the superimposed positions and so forth of left eye graphics information and right eye graphics information in the event that the transmission method is a first transmission method ("Top & Bottom" method).
[Fig. 15] Fig. 15 is a diagram for describing a method for generating left eye graphics information and right eye graphics information in the event that the transmission method is the first transmission method ("Top & Bottom" method).
[Fig. 16] Fig. 16 is a diagram for describing a method for generating left eye graphics information and right eye graphics information in the event that the transmission method is a second transmission method ("Side By Side" method).
[Fig. 17] Fig. 17 is a diagram for describing a method for generating left eye graphics information and right eye graphics information in the event that the transmission method is the second transmission method ("Side By Side" method).
[Fig. 18] Fig. 18 is a block diagram illustrating another configuration example of the transmission data generating unit in the broadcasting station.
[Fig. 19] Fig. 19 is a block diagram illustrating another configuration example of the transmission data generating unit in the broadcasting station.
[Fig. 20] Fig. 20 is a diagram for describing information of "Location" and "Region size".
[Fig. 21] Fig. 21 is a block diagram illustrating a configuration example of a Z data unit for outputting disparity information for each superimposing information.
[Fig. 22] Fig. 22 is a diagram schematically illustrating a configuration example of a video elementary stream.
[Fig. 23] Fig. 23 is a diagram illustrating a configuration example of user data in the encoding formats of MPEG2, H.264 AVC, and VC-1.
[Fig. 24] Fig. 24 is a diagram illustrating a configuration example of "user_structure" including disparity information (disparity vector).
[Fig. 25] Fig. 25 is a block diagram illustrating another configuration example of the transmission data generating unit in the broadcasting station.
[Fig. 26] Fig. 26 is a block diagram illustrating another configuration example of the transmission data generating unit in the broadcasting station.
[Fig. 27] Fig. 27 is a diagram illustrating the superimposed positions and so forth of left eye graphics information and right eye graphics information in the event that the transmission method is the second transmission method ("Side By Side" method).
[Fig. 28] Fig. 28 is a diagram illustrating a state in which a graphics image made up of graphics data to be transmitted by a conventional method extracted from bit stream data is superimposed as is on a left eye image and a right eye image.
[Fig. 29] Fig. 29 is a diagram illustrating disparity vectors (View Vectors) in three object positions at points-in-time T0, T1, T2, and T3.
[Fig. 30] Fig. 30 is a diagram illustrating a display example of subtitles (graphics information) on an image, background, close-up view object, and the perspective of subtitles.
[Fig. 31] Fig. 31 is a diagram illustrating a display example of subtitles (graphics information) on an image, and left eye graphics information LGI and right eye graphics information RGI for displaying subtitles.
[Fig. 32] Fig. 32 is a diagram for describing that of disparity vectors detected in multiple positions within an image, a disparity vector corresponding to the superimposed position thereof is used as a disparity vector.
[Fig. 33] Fig. 33 is a diagram illustrating that there are objects A, B, and C within an image, and text information indicating the remarks of each object is superimposed on the adjacent position of each object of these.
[Fig. 34] Fig. 34 is a block diagram illustrating a configuration example of a set top box making up the stereoscopic image display system.
[Fig. 35] Fig. 35 is a block diagram illustrating a configuration example of a bit stream processing unit making up the set top box.
[Fig. 36] Fig. 36 is a diagram illustrating a speaker output control example of in the event that, with regard to a disparity vector W1, a video object on the left side toward a television display is greater.
[Fig. 37] Fig. 37 is a block diagram illustrating another configuration example of the bit stream processing unit making up the set top box.
[Fig. 38] Fig. 38 is a block diagram illustrating another configuration example of the bit stream processing unit making up the set top box.
[Fig. 39] Fig. 39 is a block diagram illustrating another configuration example of the bit stream processing unit making up the set top box.
[Fig. 40] Fig. 40 is a block diagram illustrating another configuration example of the bit stream processing unit making up the set top box.
[Fig. 41] Fig. 41 is a block diagram illustrating another configuration example of the bit stream processing unit making up the set top box.
[Fig. 42] Fig. 42 is a block diagram illustrating a configuration example of a television receiver making up the stereoscopic image display system.
[Fig. 43] Fig. 43 is a block diagram illustrating a configuration example of an HDMI transmission unit (HDMI source) and an HDMI reception unit (HDMI sink).
[Fig. 44] Fig. 44 is a block diagram illustrating a configuration example of an HDMI transmitter making up the HDMI transmission unit, and an HDMI receiver making up the HDMI reception unit.
[Fig. 45] Fig. 45 is a diagram illustrating a configuration example of TMDS transmission data (in the event that image data with width x length being 1920 pixels x 1080 lines is transmitted).
[Fig. 46] Fig. 46 is a diagram illustrating the pin alignment (type A) of an HDMI terminal to which the HDMI cables of a source device and a sink device are connected.
[Fig. 47] Fig. 47 is a diagram illustrating an example of TMDS transmission data with a first transmission method ("Top & Bottom" method).
[Fig. 48] Fig. 48 is a diagram illustrating an example of TMDS transmission data with a second transmission method ("Side By Side" method).
[Fig. 49] Fig. 49 is a diagram illustrating an example of TMDS transmission data with a third transmission method ("Frame Sequential" method).
[Fig. 50] Fig. 50 is a diagram for describing the "Frame Sequential" method with HDMI 1.4 (New HDMI) and "Frame Sequential" method with HDMI 1.3 (Legacy HDMI)
[Fig. 51] Fig. 51 is a block diagram illustrating another configuration example of a bit stream processing unit making up the set top box.
[Fig. 52] Fig. 52 is a block diagram illustrating another configuration example of a bit stream processing unit making up the set top box.
[Fig. 53] Fig. 53 is a block diagram illustrating another configuration example of the stereoscopic image display system.
[Fig. 54] Fig. 54 is a diagram illustrating relationship between the display positions of the left and right images of an object on a screen, and the playback position of the stereoscopic image thereof with stereoscopic image display taking advantage of binocular disparity.

### Description of Embodiments

Hereafter, a mode for implementing the present invention (hereafter, referred to as "embodiment") will be described. Note that description will be made in the following sequence.
1. Embodiment
2. Modification

### <1. Embodiment>

### [Configuration Example of Stereoscopic Image Display System]

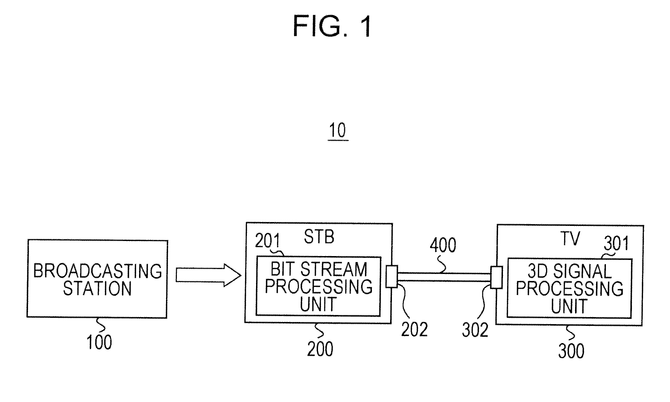

Fig. 1 illustrates a configuration example of a stereoscopic image transmission/reception system 10 serving as an embodiment. This stereoscopic image transmission/reception system 10 includes a broadcasting station 100, a set top box (STB: Set Top Box) 200, and a television receiver 300.

The set top box 200 and the television receiver 300 are connected via an HDMI (High Definition Multimedia Interface) cable 400. With the set top box 200, an HDMI terminal 202 is provided. With the television receiver 300, an HDMI terminal 302 is provided. One end of the HDMI cable 400 is connected to the HDMI terminal 202 of the set top box 200, and the other end of this HDMI cable 400 is connected to the HDMI terminal 302 of the television receiver 300.

### [Description of Broadcasting Station]

The broadcasting station 100 transmits bit stream data by carrying this on broadcast waves. This bit stream data includes stereoscopic image data including left eye image data and right eye image data, audio data, superimposing information data, further disparity information (disparity vector), and so forth. Here, the superimposing information data includes closed caption data, subtitle data, graphics data, text data, and so forth.

### [Configuration Example of Transmission Data Generating Unit]

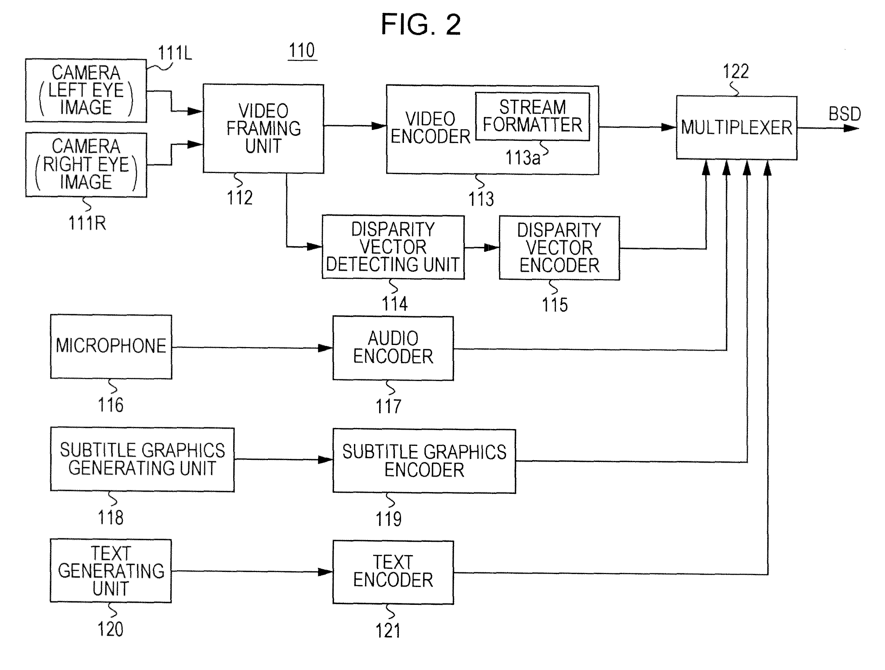

Fig. 2 illustrates a configuration example of a transmission data generating unit 110 for generating the above bit stream data at the broadcasting station 100. This configuration example is an example where a disparity vector is transmitted as numeric information. This transmission data generating unit 110 includes cameras 111L and 111R, a video framing unit 112, a video encoder 113, a video encoder 113, a disparity vector detecting unit 114, and a disparity vector encoder 115. Also, this transmission data generating unit 110 includes a microphone 116, and an audio encoder 117. Further, the transmission data generating unit 110 includes a subtitle and graphics generating unit 118, a subtitle and graphics encoder 119, a text generating unit 120, a text encoder 121, and a multiplexer 122.

The camera 111L takes a left eye image to obtain left eye image data for stereoscopic image display. The camera 111R takes a right eye image to obtain right eye image data for stereoscopic image display. The video framing unit 112 processes the left eye image data obtained at the camera 111L, and the right eye image data obtained at the camera 111R into a state according to a transmission method.

### [Transmission Method Example of Stereoscopic Image Data]

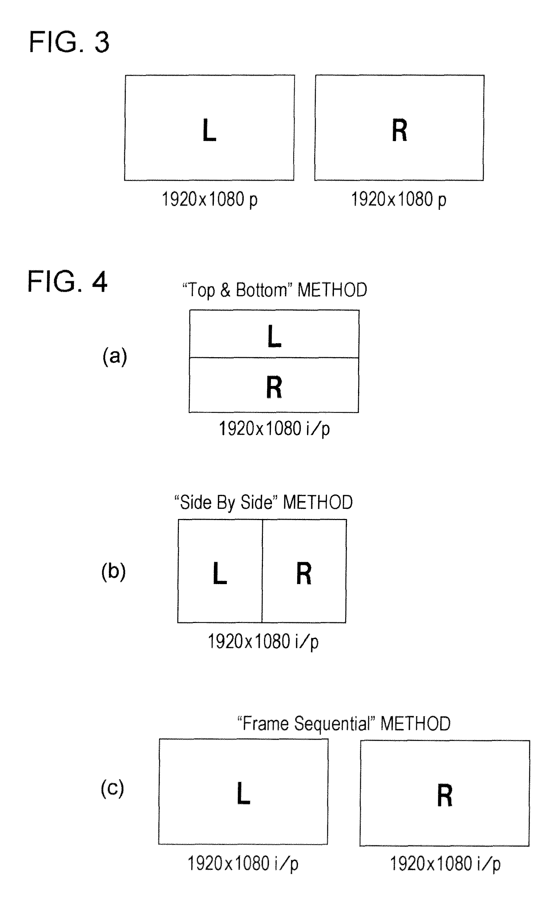

Now, the following first through third methods will be cited as transmission methods of stereoscopic image data (3D image data), but may be a transmission method other than these. Here, as illustrated in Fig. 3, description will be made regarding a case where each piece of image data of the left eye (L) and the right eye (R) is image data with determined resolution, e.g., a pixel format of 1920 x 1080 p as an example.

The first transmission method is a "Top & Bottom" method, and is, as illustrated in Fig. 4(a), a method for transmitting the pixel data of left eye image data in the first half of the vertical direction, and transmitting the pixel data of left eye image data in the second half of the vertical direction. In this case, the lines of the left eye image data and right eye image data are thinned out to 1/2, so the vertical resolution is reduced to half as to the original signal.

The second transmission method is a "Side By Side" method, and is, as illustrated in Fig. 4(b), a method for transmitting the pixel data of left eye image data in the first half of the horizontal direction, and transmitting the pixel data of right eye image data in the second half of the horizontal direction. In this case, with each piece of the left eye image data and right eye image data, the pixel data in the horizontal direction is thinned out to 1/2, so the horizontal resolution is reduced to half as to the current signal.

The third transmission method is a "Frame Sequential" method, and is, as illustrated in Fig. 4(c), a method for transmitting left eye image data and right eye image data by sequentially switching these for each field.

Returning to Fig. 2, the video encoder 113 subjects the stereoscopic image data processed at the video framing unit 112 to encoding, such as MPEG4-AVC, MPEG2, VC-1, or the like, to obtain encoded video data. Also, the video encoder 113 includes a stream formatter 113a on the subsequent stage. According to this stream formatter 113, an elementary stream of video of which the payload portion includes encoded video data is generated.

The disparity vector detecting unit 114 detects, based on left eye image data and right eye image data, a disparity vector that is the other disparity information as to one of the left eye image and right eye image in a predetermined position within an image. Here, the predetermine position within an image is all the pixel positions, the representative position of each region made up of multiple pixels, or the representative position of a region where, of superimposing information, here, graphics information or text information is superimposed, or the like.

### [Detection of Disparity Vector]

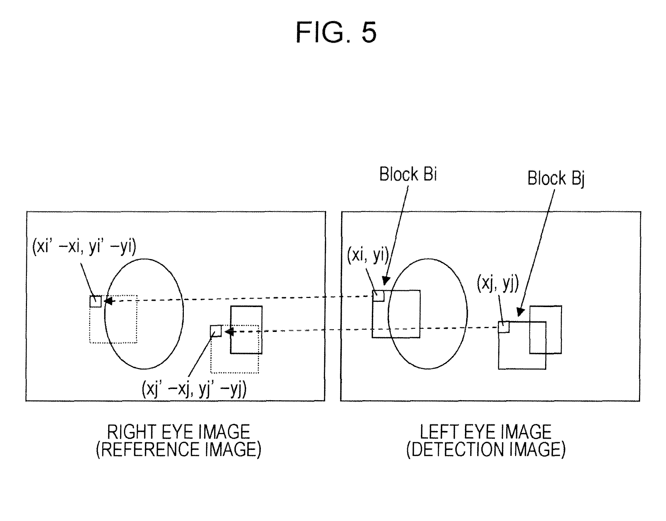

A detection example of a disparity vector will be described. Here, description will be made regarding a case where a disparity vector of a right eye image as to a left eye image is detected. As illustrated in Fig. 5, the left eye image will be taken as a detection image, and the right eye image will be taken as a reference image. With this example, disparity vectors in the positions of (xi, yi) and (xj, yj) will be detected.

Description will be made regarding a case where the disparity vector in the position of (xi, yi) is detected, as an example. In this case, a pixel block (disparity detection block) Bi of, for example, 8 x 8 or 16 x 16 with the pixel position of (xi, yi) as upper left is set to the left eye image. Subsequently, with the right eye image, a pixel block matched with the pixel block Bi is searched.

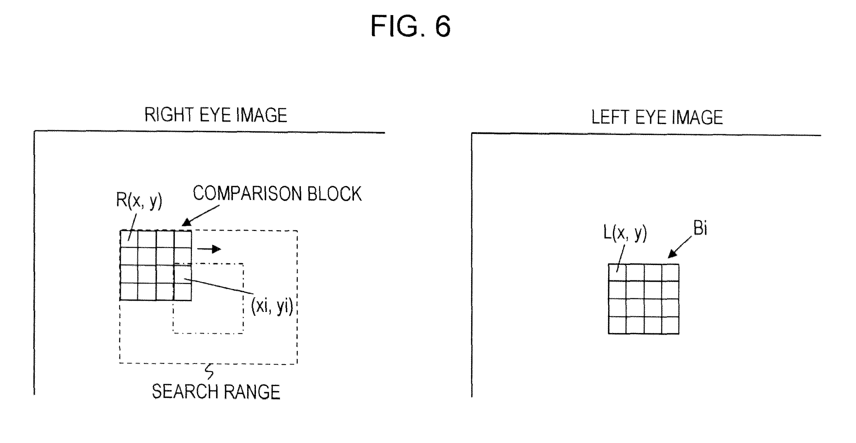

In this case, a search range with the position of (xi, yi) as the center is set to the right eye image, and a comparison block of, for example, 8 x 8 or 16 x 16 that is similar to the above pixel block Bi is sequentially set with each pixel within the search range sequentially being taken as the pixel of interest. Summation of the difference absolute value for each of the corresponding pixels between the pixel block Bi and a comparison block sequentially set is obtained. Here, as illustrated in Fig. 6, if we say that the pixel value of the pixel block Bi is L(x, y), and the pixel value of a comparison block is R(x, y), the summation of the difference absolute value between the pixel block Bi and the certain comparison block is represented with Σ|L(x, y) - R(x, y)|.

When n pixels are included in the search range set to the right eye image, finally, n summations S1 through Sn are obtained, of which the minimum summation Smin is selected. Subsequently, the position (xi', yi') of an upper left pixel is obtained from the comparison block from which the summation Smin has been obtained. Thus, the disparity vector in the position of (xi, yi) is detected such as (xi' - xi, yi' - yi). Though detailed description will be omitted, with regard to the disparity vector in the position (xj, yj) as well, a pixel block Bj of, for example, 8 x 8 or 16 x 16 with the pixel position of (xj, yj) as upper left is set to the left eye image, and detection is made in the same process.

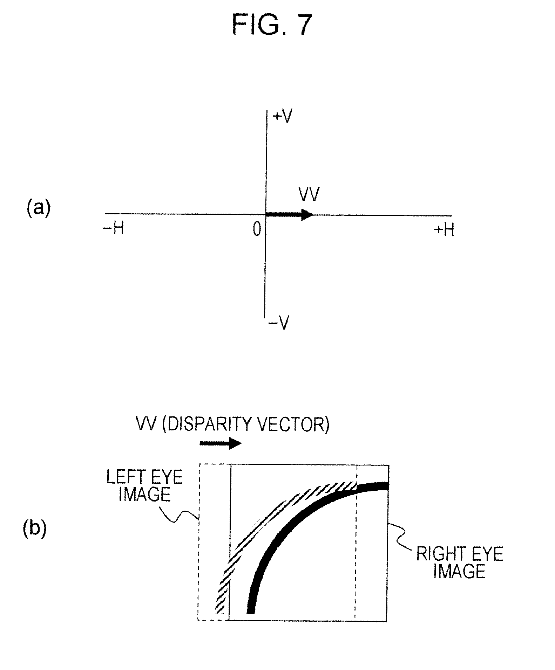

Fig. 7(a) illustrates an example of a disparity vector W in a predetermined position within an image, to be detected at the disparity vector detecting unit 114. This case means that, as illustrated in Fig. 7(b), with the predetermined position within this image, when shifting the left eye image (detection image) by the disparity vector W, the right eye image (reference image) is overlaid.

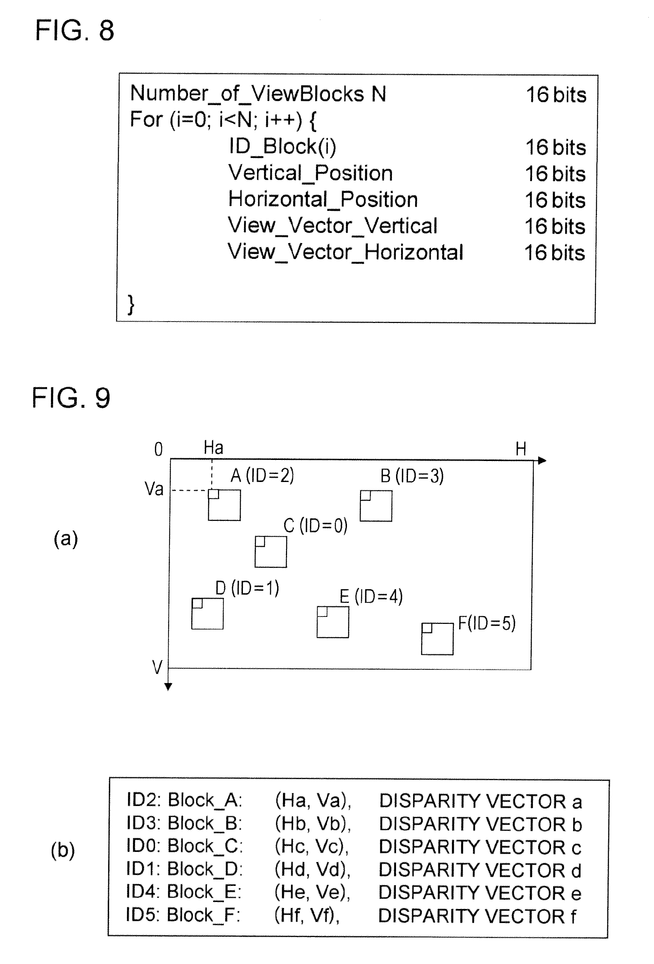

Returning to Fig. 2, the disparity vector encoder 115 generates the elementary stream of a disparity vector including a disparity vector detected at the disparity vector detecting unit 114, and so forth. Here, the elementary stream of a disparity vector includes the following content. Specifically, ID (ID_Block), vertical position information (Vertical_Position), horizontal position information (Horizontal_Position), and a disparity vector (View_Vector) are set as one set. Subsequently, this one set is repeated by N number of times that is the number of disparity detection blocks. Fig. 8 illustrates the transmission content of a disparity vector. A disparity vector includes a vertical direction component (View_Vector_Vertical) and a horizontal direction component (View_Vector_Horizontal).

Note that the vertical and horizontal positions of the disparity detection block become offset values in the vertical direction and horizontal direction from the origin of upper left of the image to the pixel of upper left of the block. The reason why the ID of the disparity detection block is added to transmission of each disparity vector is to link to a superimposing information pattern, such as subtitle information, graphics information, text information, or the like, to be superimposed and displayed on the image.

For example, as illustrated in Fig. 9(a), when there are disparity detection blocks A through F, the transmission content includes, as illustrated in Fig. 9(b), the IDs of the disparity detection blocks A through F, vertical and horizontal position information, and a disparity vector. For example, in Fig. 9(b), with regard to the disparity detection block A, ID2 indicates the ID of the disparity detection block A, (Ha, Va) indicates the vertical and horizontal position information of the disparity detection block A, and a disparity vector a indicates the disparity vector of the disparity detection block A.

Now, timing for detecting and transmitting a disparity vector will be described. With regard to this timing, for example, the following first through fourth examples can be conceived.

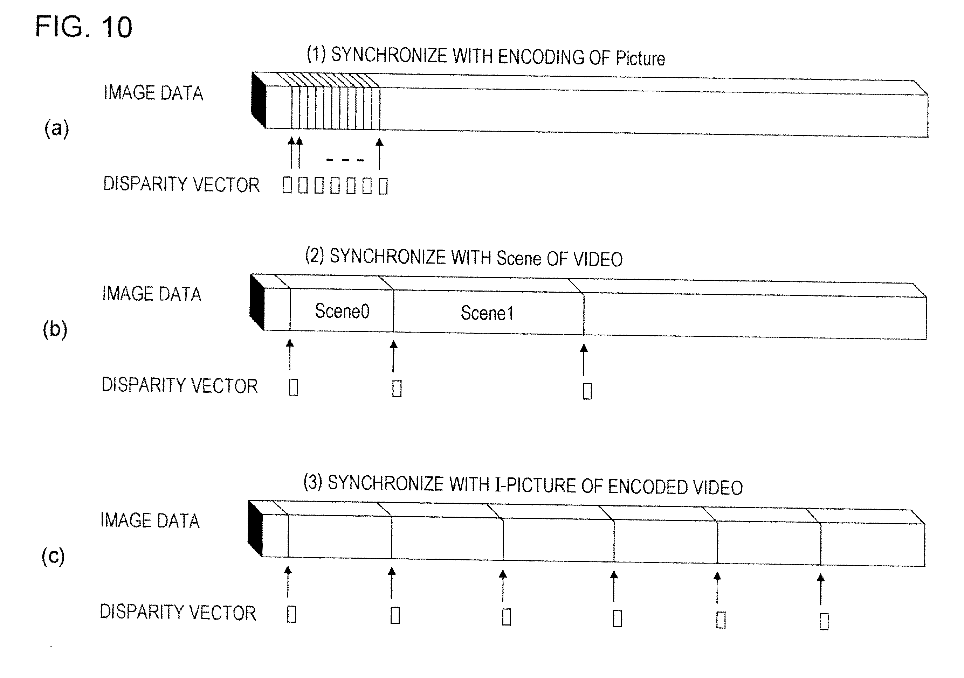

With the first example, as illustrated in Fig. 10(a), the timing is synchronized with encoding of a picture. In this case, a disparity vector is transmitted in increments of pictures. The increments of pictures are the finest increments at the time of transmitting a disparity vector. With the second example, as illustrated in Fig. 10(b), the timing is synchronized with a scene of video. In this case, a disparity vector is transmitted in increments of scenes.

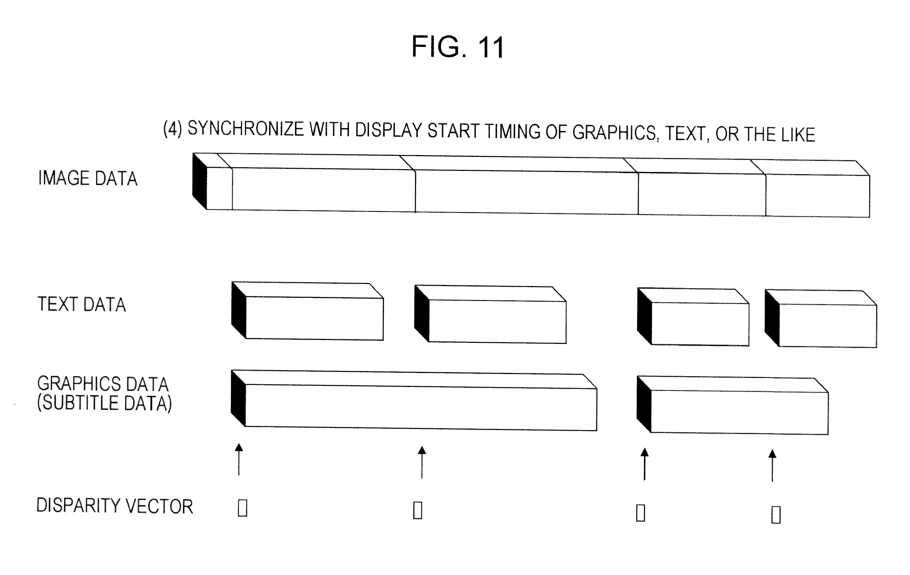

With the third example, as illustrated in Fig. 10(c), the timing is synchronized with an I picture (Intra picture) or GOP (Group Of Pictures) of encoded video. With the fourth example, as illustrated in Fig. 11, the timing is synchronized with display start timing, such as subtitle information, graphics information, text information, or the like, to be superimposed and displayed on an image.

Returning to Fig. 2, the microphone 116 detects audio corresponding to images taken at the cameras 111L and 111R to obtain audio data. The audio encoder 117 subjects the audio data obtained at the microphone 116 to encoding, such as MPEG-2 Audio AAC, or the like, to generate an audio elementary stream.

The subtitle and graphics generating unit 118 generates the data (subtitle data and graphics data) of subtitle information and graphics information to be superimposed on an image. The subtitle information is, for example, subtitles. Also, the graphics information is, for example, logo or the like. The subtitle data and graphics data are provided with idling offset information indicating a superimposed position on an image.

This idling offset information indicates, for example, offset values in the vertical direction and horizontal direction from the origin of upper left of an image to a pixel of upper left of the superimposed position of subtitle information or graphics information. Note that the standard for transmitting subtitle data as bitmap data is standardized as DVB_Subtitling using DVB that is European digital broadcasting standard, and is operated.

The subtitle and graphics encoder 119 inputs the data (subtitle data and graphics data) of the subtitle information and graphics information generated at the subtitle and graphics generating unit 118. Subsequently, this subtitle and graphics encoder 119 generates an elementary stream with these data being included in the payload portion.

The text generating unit 120 generates the data (text data) of text information to be superimposed on an image. The text information is, for example, an electronic program guide, text broadcasting content, or the like. This text data is provided with idling offset information indicating a superimposed position on an image in the same way as with the above graphics data. This idling offset information indicates offset values in the vertical direction and horizontal direction from the origin of upper left of an image to a pixel of upper left of the superimposed position of the text information. Note that examples of transmission of text data include EPG operated as program reservation, and CC_data (Closed Caption) of U.S. digital terrestrial specification ATSC.

The text encoder 121 inputs the text data generated at the text generating unit 120. Subsequently, the text encoder 121 generates an elementary stream with these data being included in the payload portion.

The multiplexer 122 multiplexes the packetized elementary streams output from the encoders 113, 115, 117, 119, and 121. Subsequently, the multiplexer 122 outputs bit stream data (transport stream) BSD serving as transmission data.

The operation of the transmission data generating unit 110 illustrated in Fig, 2 will roughly be described. With the camera 111L, a left eye image is taken. The left eye image data for stereoscopic image display, obtained at the camera 111L is supplied to the video framing unit 112. Also, with the camera 111R, a right eye image is taken. The right eye image data for stereoscopic image display, obtained at the camera 111R is supplied to the video framing unit 112. With the video framing unit 112, the left eye image data and the right eye image data are processed into a state according to a transmission method, and stereoscopic image data is obtained (see Fig. 4(a) through (c)).

The stereoscopic image data obtained at the video framing unit 112 is supplied to the video encoder 113. With the video encoder 113, the stereoscopic image data is subjected to encoding, such as MPEG4-AVC, MPEG2, VC-1, or the like, and a video elementary stream including encoded video data is generated. This video elementary stream is supplied to the multiplexer 122.

Also, the left eye image data and right eye image data obtained at the cameras 111L and 111R are supplied to the disparity vector detecting unit 114 through the video framing unit 112. With this disparity vector detecting unit 114, based on the left eye image data and right eye image data, a disparity detection block is set to a predetermined position within an image, and a disparity vector that is the other disparity information as to one of the left eye image and right eye image is detected.

The disparity vector in the predetermined position within the image detected at the disparity vector detecting unit 114 is supplied to the disparity vector encoder 115. In this case, the ID of the disparity detection block, the vertical position information of the disparity detection block, the horizontal position information of the disparity detection block, and the disparity vector are given as one set. With the disparity vector encoder 115, a disparity vector elementary stream including the transmission content of the disparity vector (see Fig. 8) is generated. This disparity vector elementary stream is supplied to the multiplexer 122.

Also, with the microphone 116, audio corresponding to the images taken at the cameras 111L and 111R is detected. The audio data obtained at this microphone 116 is supplied to the audio encoder 117. With this audio encoder 117, the audio data is subjected to encoding, such as MPEG-2 Audio AAC or the like, and an audio elementary stream including the encoded audio data is generated. This audio elementary stream is supplied to the multiplexer 122.

Also, with the subtitle and graphics generating unit 118, the data of subtitle information and graphics information (subtitle data and graphics data) to be superimposed on an image is generated. This data (bitmap data) is supplied to the subtitle and graphics encoder 119. The subtitle and graphics data is provided with idling offset information indicating a superimposed position on the image. With the subtitle and graphics encoder 119, this graphics data is subjected to predetermined encoding, and an elementary stream including encoded data is generated. This elementary stream is supplied to the multiplexer 122.

Also, with the text generating unit 120, the data of text information (text data) to be superimposed on an image is generated. This text data is supplied to the text encoder 121. This text data is provided with idling offset information indicating a superimposed position on an image in the same way as with the above graphics data. With the text encoder 121, this text data is subjected to predetermined encoding, and an elementary stream including the encoded data is generated. This elementary stream is supplied to the multiplexer 122.

With the multiplexer 122, the packet of the elementary stream supplied from each encoder is multiplexed, and bit stream data (transport stream) BSD serving as transmission data is obtained.

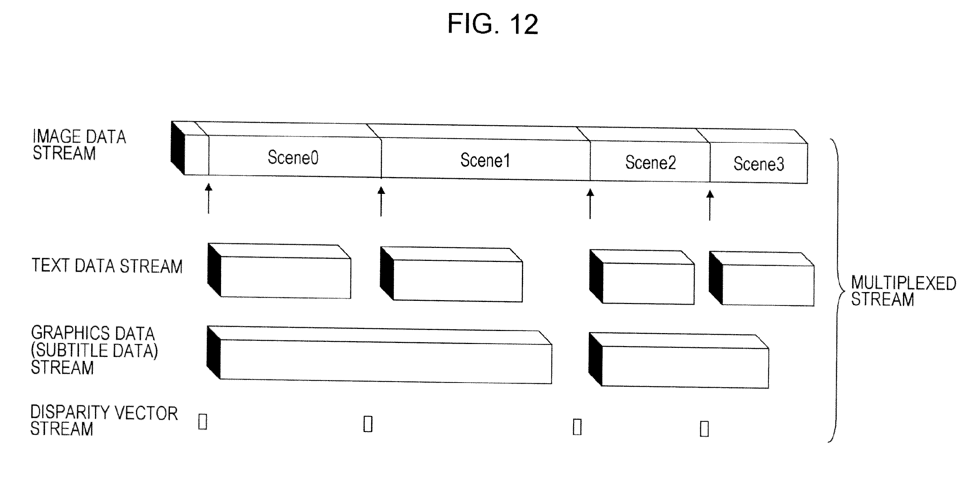

Fig. 12 illustrates a stream example of each data to be multiplexed at the transmission data generating unit 110 illustrated in Fig. 2. Note that this example illustrates a case where a disparity vector is detected and transmitted in increments of scenes of video (see Fig. 10(b)). Note that the packet of each stream is provided with a timestamp for synchronized display, and with the reception side, superimposing timing as to an image, such as subtitle information, graphics information, text information, or the like, may be controlled.

### [Another Configuration Example of Transmission Data Generating Unit]

Note that the above transmission data generating unit 110 illustrated in Fig. 2 is configured to transmit the transmission content of a disparity vector (see Fig. 8) to the reception side as an independent elementary stream. However, it can also be conceived to transmit the transmission content of a disparity vector by being embedded in another stream. For example, the transmission content of a disparity vector is transmitted by being embedded in a stream of video as user data. Also, for example, the transmission content of a disparity vector is transmitted by being embedded in the stream of a subtitle, graphics, or text.

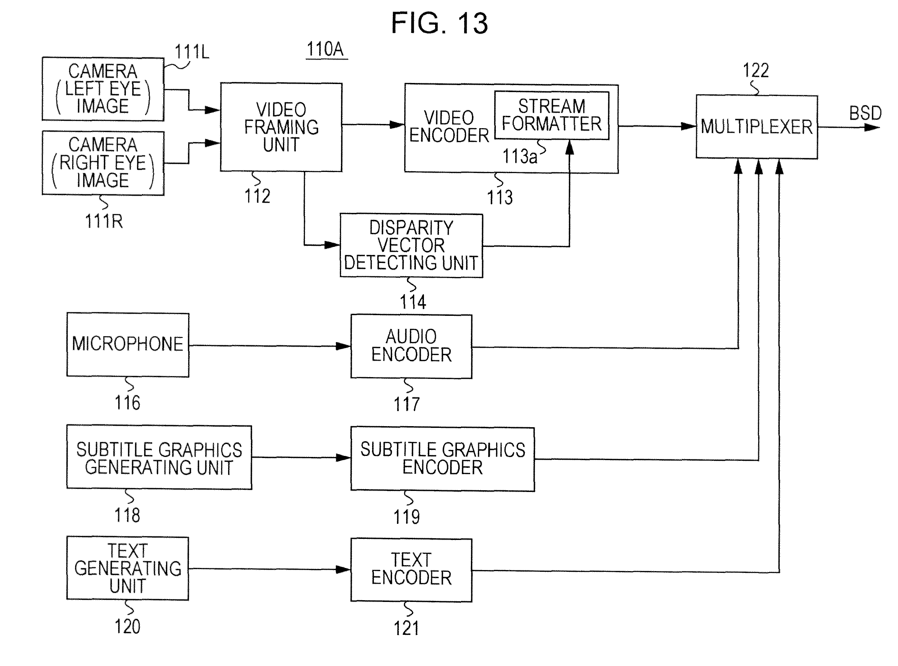

Fig. 13 illustrates a configuration example of a transmission data generating unit 110A. This example is also an example wherein a disparity vector is transmitted as numeric information. This transmission data generating unit 110A is configured to transmit the transmission content of a disparity vector by being embedded in a stream of video as user data. In Fig. 13, portions corresponding to Fig. 2 are denoted with the same reference numerals, and detailed description thereof will be omitted.

With this transmission data generating unit 110A, the disparity vector at the predetermined position within an image detected at the disparity vector detecting 114 is supplied to the stream formatter 113a within the video encoder 113. In this case, the ID of the disparity detection block, the vertical position information of the disparity detection block, the horizontal position information of the disparity detection block, and the disparity vector are given as one set. With the stream formatter 113a, the transmission content of a disparity vector (see Fig. 8) is embedded in a video stream as user data.

While detailed description will be omitted, the transmission data generating unit 110A illustrated in Fig. 13 is otherwise configured in the same way as with the transmission data generating unit 110 illustrated in Fig. 2, and operates in the same manner.

### [Another Configuration Example of Transmission Data Generating Unit]

Also, the transmission data generating unit 110 illustrated in Fig. 2 and the transmission data generating unit 110A illustrated in Fig. 13 transmit a disparity vector as numeric information (see Fig. 8). However, instead of a disparity vector being transmitted as numeric information, a disparity vector is transmitted by disparity information being reflected beforehand in the data of superimposing information (e.g., subtitle information, graphics information, text information, etc.) to be superimposed on an image on the transmission side.

For example, in the event of reflecting disparity information in the data of graphics information, with the transmission side, graphics data corresponding to both of left eye graphics information to be superimposed on a left eye image, and right eye graphics information to be superimposed on a right eye image is generated. In this case, the left eye graphics information and right eye graphics information are the same graphics information. However, with a display position within the image, for example, the right eye graphics information is set so as to be shifted in the horizontal direction by an amount equivalent to the horizontal direction component of the disparity vector corresponding to the display position thereof, as to the left eye graphics information.

For example, as for a disparity vector, of disparity vectors detected in multiple positions within an image, the disparity vector corresponding to the superimposed position thereof is used. Also, for example, as for a disparity vector, of disparity vectors detected in multiple positions within an image, a disparity vector in the position to be recognized as the nearest in respect of perspective is used. Note that, while detailed description will be omitted, the same holds for a case where disparity information is reflected on the data of subtitle information or graphics information.

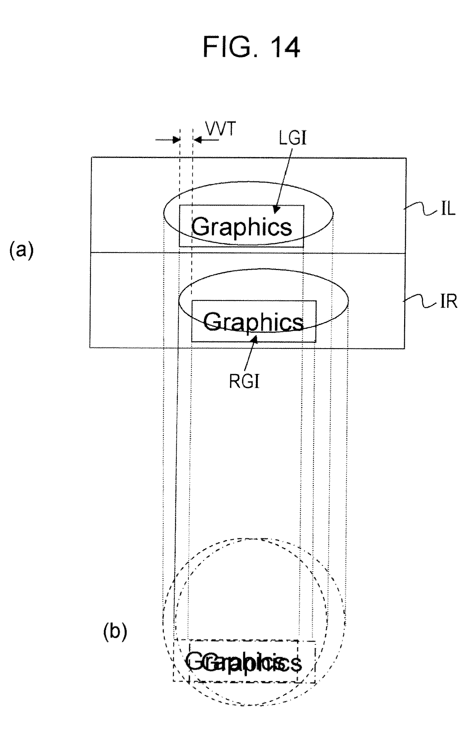

Fig. 14(a) illustrates the superimposed position of left eye graphics information and right eye graphics information in the event that the transmission method is the above first transmission method ("Top & Bottom" method). These left eye graphics information and right eye graphics information are the same information. However, right eye graphics information RGI to be superimposed on a right eye image IR is set to a position shifted in the horizontal direction by the horizontal direction component VVT worth of the disparity vector as to left eye graphics information LGI to be superimposed on a left eye image IL.

Graphics data is generated, as illustrated in Fig. 14(a), so that each piece of the graphics information LGI and RGI is superimposed on each of the images IL and IR. Thus, a viewer can observe, as illustrated in Fig. 14(b), each piece of the graphics information LGI and RGI along with each of the images IL and IR using disparity, so can also recognize perspective regarding graphics information.

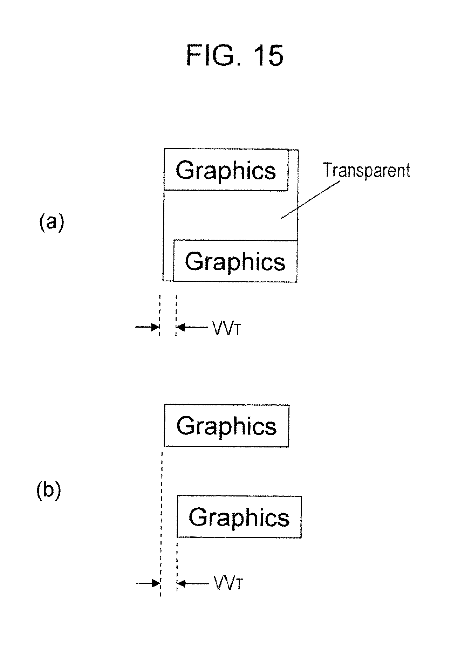

For example, the graphics data of each piece of the graphics information LGI and RGI is, as illustrated in Fig. 15(a), generated as the data of a single region. In this case, the data of portions other than each piece of the graphics information LGI and RGI should be generated as transparent data. Also, for example, the graphics data of each pieces of the graphics information LGI and RGI is, as illustrated in Fig. 15(b), generated as the data of a separate region.

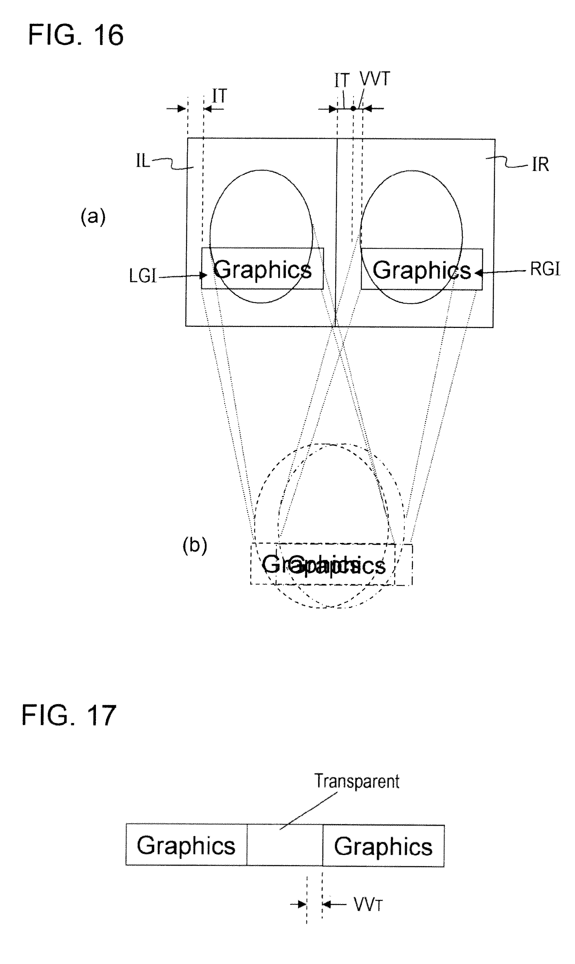

Fig. 16(a) illustrates the superimposed position of left eye graphics information and right eye graphics information in the event that the transmission method is the above second transmission method ("Side By Side" method). These left eye graphics information and right eye graphics information are the same information. However, right eye graphics information RGI to be superimposed on a right eye image IR is set to a position shifted in the horizontal direction by the horizontal direction component VVT worth of the disparity vector as to left eye graphics information LGI to be superimposed on a left eye image IL. Note that IT is an idling offset value.

Graphics data is generated, as illustrated in Fig. 16(a), so that the graphics information LGI and RGI are superimposed on the images IL and IR, respectively. Thus, the viewer can observe, as illustrated in Fig. 16(b), each piece of the graphics information LGI and RGI along with each of the images IL and IR using disparity, so can also recognize perspective regarding graphics information.

For example, the graphics data of each piece of the graphics information LGI and RGI is, as illustrated in Fig. 17, generated as the data of a single region. In this case, the data of portions other than each piece of the graphics information LGI and RGI should be generated as transparent data.

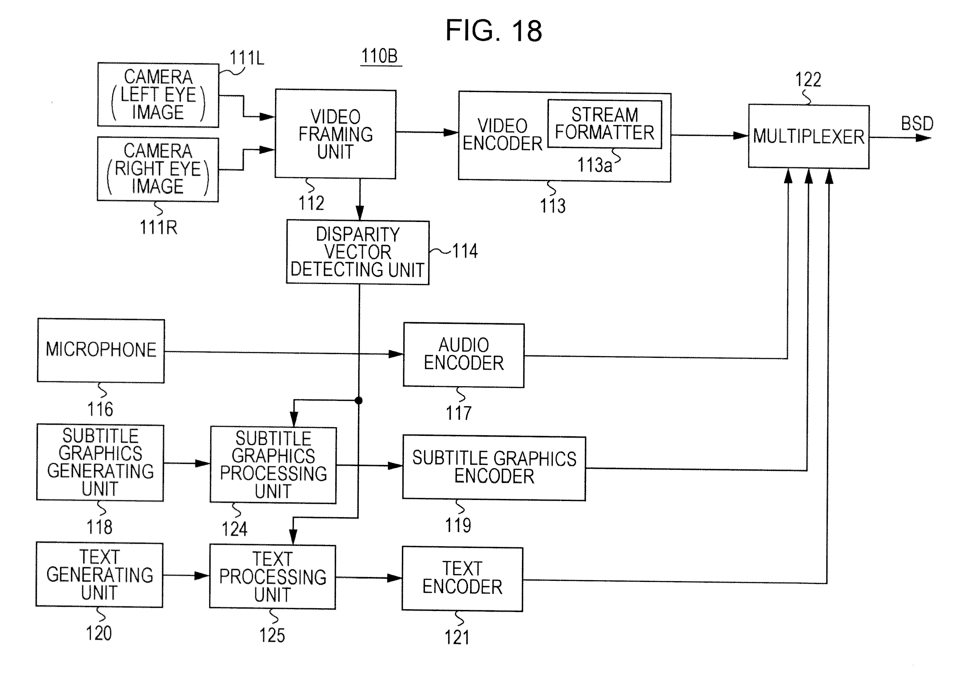

Fig. 18 illustrates a configuration example of a transmission data generating unit 110B. This transmission data generating unit 110B is configured to transmit disparity information by being reflected in the data of subtitle information, graphics information, and text information. In this Fig. 18, portions corresponding to Fig. 2 are denoted with the same reference numerals, and detailed description thereof will be omitted.

With this transmission data generating unit 110B, a subtitle and graphics processing unit 124 is inserted between the subtitle and graphics generating unit 118 and the subtitle and graphics encoder 119. Also, with this transmission data generating unit 110B, a text processing unit 125 is inserted between the text generating unit 120 and the text encoder 121. Subsequently, the disparity vector in a predetermined position within the image detected by the disparity vector detecting unit 114 is supplied to the subtitle and graphics processing unit 124 and text processing unit 125.

With the subtitle and graphics processing unit 124, the data of the subtitle and graphics information LGI and RGI of the left eye and right eye to be superimposed on a left eye image IL and a right eye image IR is generated, and is, in this case, generated based on the subtitle data and graphics data generated at the subtitle and graphics generating unit 118. The subtitle information and graphics information for the left eye and right eye are the same information. However, with regard to the superimposed position within the image, for example, the subtitle information and graphics information of the right eye are set so as to be shifted in the horizontal direction by the horizontal direction component VVT of the disparity vector as to the subtitle information and graphics information of the left eye (see Fig. 14(a) and Fig. 16(a)).

In this way, the subtitle data and graphics data generated at the subtitle and graphics processing unit 124 are supplied to the subtitle and graphics encoder 119. Note that the subtitle data and graphics data are added with idling offset information indicating a superimposed position on the image. With the subtitle and graphics encoder 119 generates the elementary streams of the subtitle data and graphics data generated at the subtitle and graphics processing unit 124.

Also, with the text processing unit 125, based on the text data generated at the text generating unit 120, the data of left eye text information to be superimposed on a left eye image, and the data of right eye text information to be superimposed on a right eye image are generated. In this case, the left eye text information and right eye text information are the same text information, but with regard to the superimposed position within the image, for example, the right eye text information is set so as to be shifted in the horizontal direction by the horizontal direction component VVT of the disparity vector as to the left eye text information.

In this way, the text data generated at the text processing unit 125 is supplied to the text encoder 121. Note that this text data is added with idling offset information indicating a superimposed position on the image. With the text encoder 121, the elementary stream of the text data generated at the text processing unit is generated.

While detailed description will be omitted, the transmission data generating unit 110B illustrated in Fig. 18 is otherwise configured in the same way as with the transmission data generating unit 110 illustrated in Fig. 2, and operates in the same manner.

### [Another Configuration Example of Transmission Data Generating Unit]

The transmission data generating unit 110 shown in Fig. 2 is of a configuration to transmit the transfer contents (see Fig. 8) based on the disparity vector detected at the disparity vector detecting unit 114, to the receiving side as it is, without correlation to each of the superimposing information data. However, it can be conceived to transfer disparity information correlated with each superimposing information data.

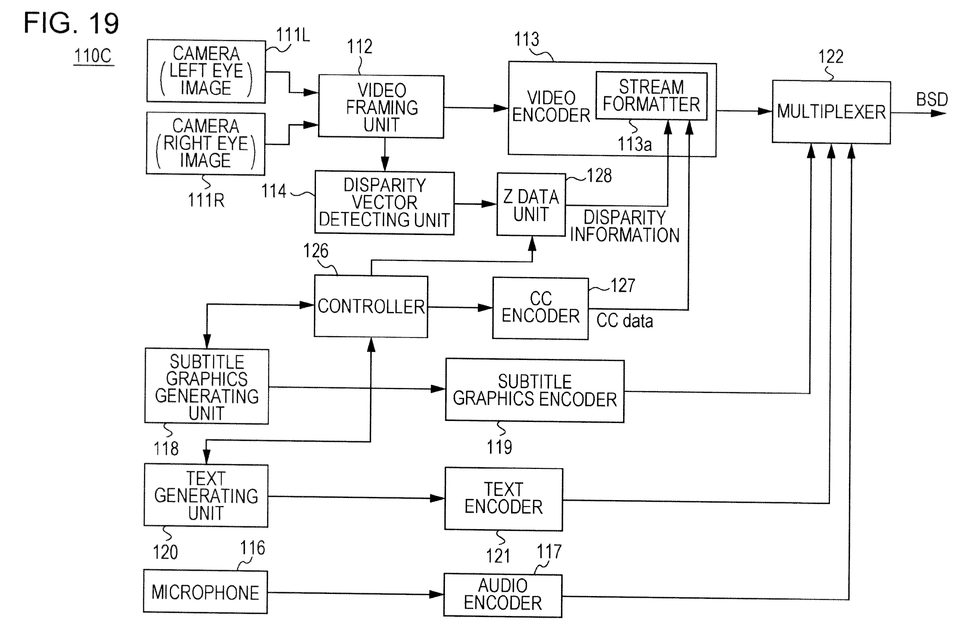

Fig. 19 illustrates a configuration example of a transmission data generating unit 110C. This transmission data generating unit 110C is configured to transmit disparity information correlated with each superimposing information data. In this Fig. 19, portions corresponding to Fig. 2 are denoted with the same reference numerals, and detailed description thereof will be omitted. The transmission data generating unit 110C includes a controller 126, a CC (Closed Caption) encoder 127, and a Z data unit 128.

The CC encoder 127 is an encoder conforming to CEA-708, and outputs CC data (closed caption information data) for performing subtitle display of closed captions. The controller 126 controls the CC encoder 127. For example, an information set of "Region_ID (WindowID)", "Location (AnchorID)", and "Region size (SetPenAttribute)" is provided from the controller 126 to the CC encoder 127.

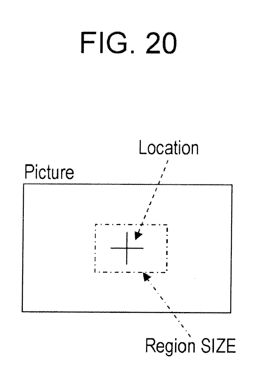

Now, the information of "Location (AnchorID)" indicates at what position of the image (Picture) to display the subtitles of closed caption identified by "Region_ID (WindowID)", as shown in Fig. 20. Also, the information of "Region size (SetPenAttribute)" indicates the size of the region where subtitle display of closed captions identified by "Region_ID (WindowID)" is to be performed, as shown in Fig. 20.

The Z data unit 128 outputs disparity information (disparity vector) correlated with each superimposing information data. That is to say, with regard to closed caption information, the Z data unit 128 outputs disparity information correlated with each WindowID included in the CC data output from the CC encoder 127. Also, with regard to superimposing information such as subtitle information, graphics information, text information, and so forth, the Z data unit 128 outputs disparity information correlated with each superimposing information data.

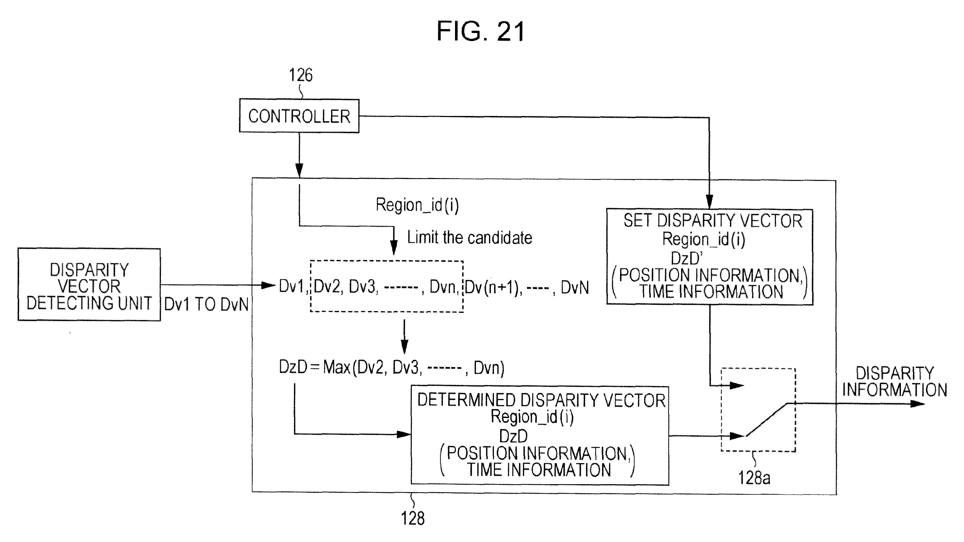

Fig. 21 illustrates a configuration example of the Z data unit 128. The Z data unit 128 outputs disparity information for each Region_id specified by the controller 126. Now, description will be made regarding the Region_id. The Region_id is an identifier for correlating between each superimposing information such as closed caption information, subtitle information, graphics information, text information and so forth, and the disparity information.

For example, 0 through 7 of the Region_id is assigned to identifying disparity information corresponding to Window 0 to 7 of the CC data stipulated in CEA-708. Also, Region_id 8 to 15 is reserved for future extension. Also, Region_id 16 and on is assigned for identifying disparity information correlated to superimposing information other than closed caption information (subtitle information, graphics information, text information, etc.)

Note that the subtitle data and graphics data generated at the subtitle graphics generating unit 118, and the text data generated at the text generating unit 120 is provided with an identifier corresponding to the above-described Region_id. An identifier corresponding to the Region_id means an identifier which is the same as the Region_id or an identifier correlated with the Region_id. Accordingly, at the receiving side, each superimposing information such as subtitle information, graphics information, and text information, and the disparity information to be used as to the superimposing information, can be correlated.

The Z data unit 128 outputs disparity information for each Region_id, as described above. The Z data unit 128 selectively outputs a determined disparity vector or set disparity vector as disparity information, by switching control of the controller 126 by user operations, for example. A determined disparity vector is a disparity vector determined based on multiple disparity vectors detected at the disparity vector detecting unit 114. A set disparity vector is a disparity vector set by predetermined program processing, or manual operations by a user, for example.

First, a case of outputting a determined disparity vector as disparity information will be described. In this case, the information set of "Region_ID (WindowID)", "Location (AnchorID)", and "Region size (SetPenAttribute)" is provided from the controller 126 to the Z data unit 128, with relation to the closed caption information. Also, an information set of "Region_ID", "Location", and "Region size", is provided from the controller 126 to the Z data unit 128, with relation to each superimposing information such as the subtitle information, graphics information, text information, and so forth.

Also, multiple, N in this case, of disparity vectors Dv0 through DvN are input from the disparity vector detecting unit 114 to the Z data unit 114. The N disparity vectors Dv0 through DvN are disparity vectors detected at N positions within the image by the disparity vector detecting unit 114 based on the left eye image data and right eye image data.

The Z data unit 128 extracts disparity vectors relating to display region of the superimposing information determined by the information of "Location" and "Region size", from the N disparity vectors Dv0 through DvN, for each Region_id. For example, in the event that there is one or multiple disparity vectors of which the detection positions are within the display region, these disparity vectors are selected as disparity vectors relating to the display region. Also, in the event that there is not one or multiple disparity vectors of which the detection positions are within the display region, one or multiple disparity vectors situated nearby the display region are selected as disparity vectors relating to the display region. In the example shown in the drawing, Dv2 through Dvn are selected as disparity vectors relating to the display region.

The Z data unit 128 then selects, from the disparity vectors relating to the display region, the one with the greatest value with a sign for example, and takes this as a determined disparity vector DzD. As described above, a disparity vector is made up of a vertical direction component (View_Vector_Vertical) and a horizontal direction component (View_Vector_Horizontal), but here, only the horizontal direction component for example is used as the value with a sign. The reason is that at the reception side, processing is performed in which the superimposing information such as the closed caption information to be superimposed on the left eye image and right eye image is shifted in the horizontal direction based on the disparity information, and the horizontal direction component is important.

Note that information indicating superimposing position and information indicating display time is added by the controller 126 to the determined disparity vector DzD determined for each Region_id as described above, for that corresponding to other superimposing information besides the closed caption information. The information indicating the superimposing position is vertical direction position information (Vertical_Position) and horizontal direction position information (Horizontal_Position), for example. Also, information indicating display time is frame count information (Duration_Counter) corresponding to the display duration time, for example. In the case of closed caption information, control data of superimposing position and display time is included within the closed caption data, so these information do not need to be sent separately.

Next, description will be made regarding a case of outputting set disparity vectors as disparity information. In this case, the controller 126 sets a disparity vector for each Region_id by predetermined program processing, or by manual operations of a user. For example, different disparity vectors are set according to the superimposing position of the superimposing information, or common disparity information is set regardless of the superimposing position, or different disparity information is set for each type of superimposing information. The Z data unit 128 takes the disparity vector of each Region_id set in this way as a set disparity vector DzD'. Now, the type of superimposing information is, for example, types such as closed caption information, subtitle information, graphics information, text information, and so forth. Also, the type of superimposing is, for example, types classified by superimposing position, duration of superimposing time, and so forth.

Note that for disparity vectors set for each Region_id by the controller 126, essentially just the horizontal direction component has to be set. This is because at the reception side, processing is performed in which the superimposing information such as the closed caption information to be superimposed on the left eye image and right eye image is shifted in the horizontal direction based on the disparity information, and the horizontal direction component is important. Also, for the set disparity vector DzD', that information indicating superimposing position and information indicating display time is added by the controller 126 for that corresponding to other superimposing information besides the closed caption information, in the same way as with the determined disparity vector DzD described above.

Returning to Fig. 19, the CC data output from the CC encoder 127 and the disparity information output from the Z data unit 128 (including DzD/DzD', and superimposing position information and display time information as necessary), is set to the stream formatter 113a of the video encoder 113. At the stream formatter 113a, CC data and disparity information is embedded in the video elementary stream as user data.

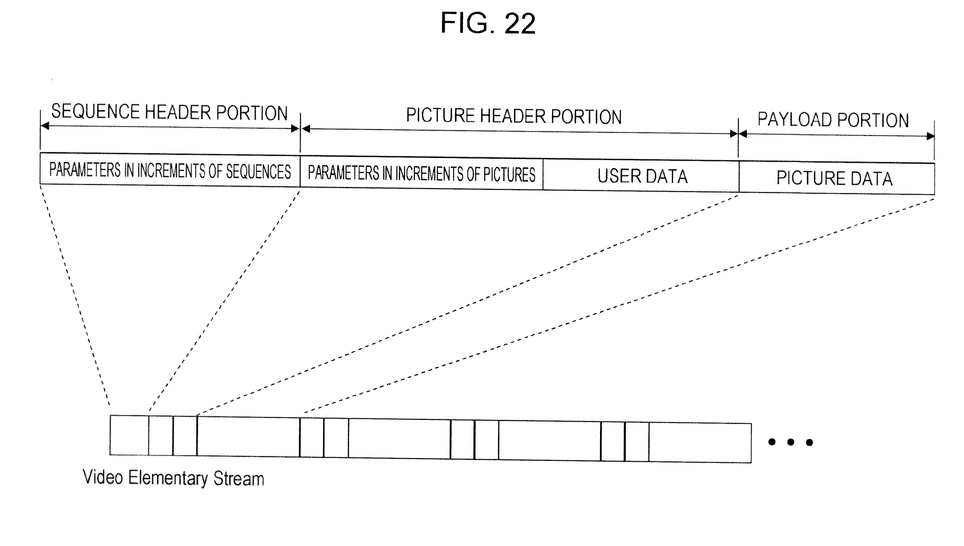

Fig. 22 schematically illustrates a configuration example of a video elementary stream (Video Elementary Stream). A video elementary stream has a sequence header portion including parameters in increments of sequences at the top thereof. Following the sequence header portion, a picture header including parameters in increments of pictures and user data is disposed. Following the picture header portion is a payload portion including the picture data. Thereafter, a picture header portion and payload portion are repeatedly positioned.

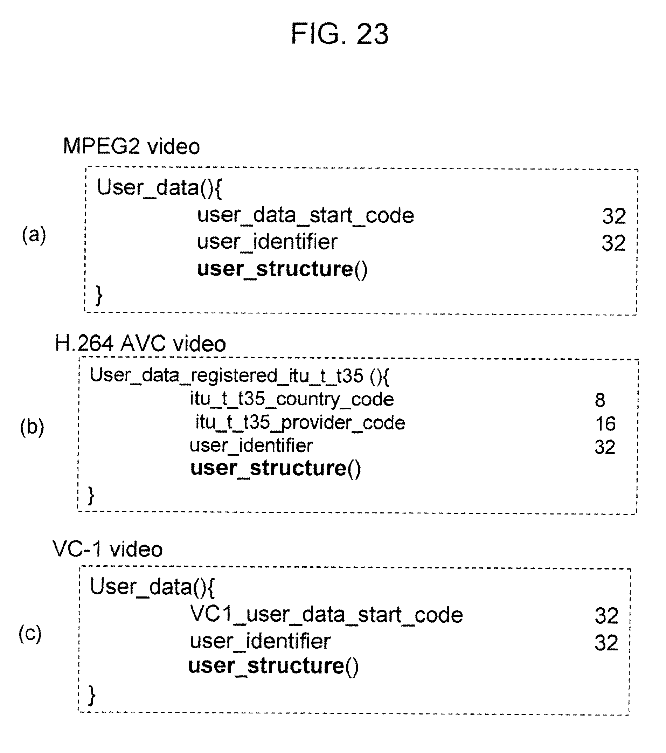

The CC data and disparity information is embedded in the user data region of the picture header portion as described above. Fig. 23 illustrates a configuration example of user data. Fig. 23(a) illustrates the configuration of user data in a case that the encoding format is MPEG2. Fig. 23(b) illustrates the configuration of user data in a case that the encoding format is H.264 AVC (MPEG4-AVC). Further, Fig. 23(c) illustrates the configuration of user data in a case that the encoding format is VC-1.

While detailed description will be omitted, the configuration of the user data is about the same with each format. That is to say, first, code is disposed which indicates the start of the user data, following which is disposed an identifier "user_identifier" indicating the type of data, and further after is disposed "user_structure" which is the main body of data.

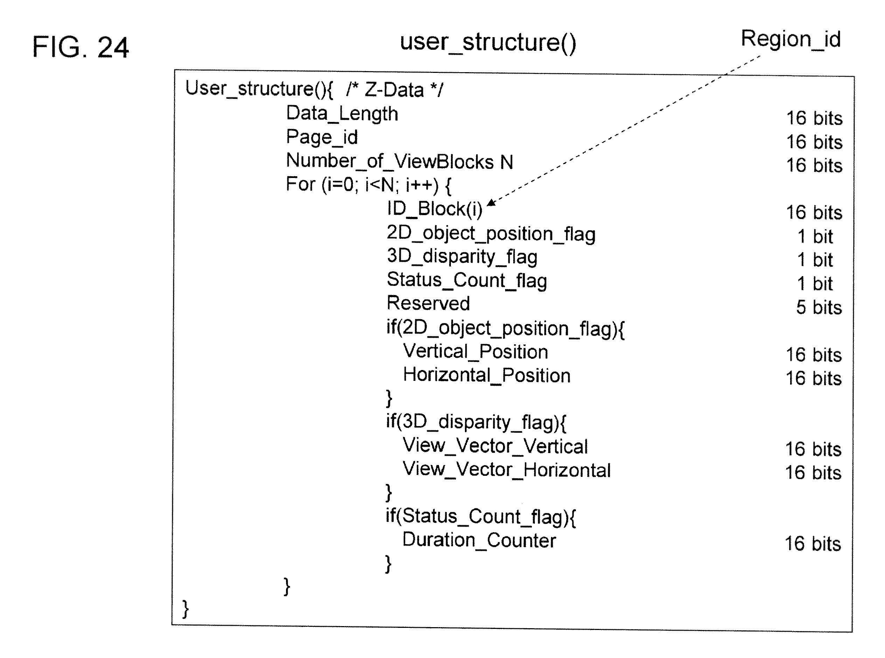

Fig. 24 illustrates a configuration example of "user_structure". "Data_Length" illustrates the data size of this "user_structure". "Page_id" corresponds to the pattern of subtitle data, and is an identifier for identifying the page of the "user_structure", although there are cases of being used for subtitle language identification as a data group ID. "Number_of_ViewBlocksN" indicates that disparity information and the like of N Region_id are included in this "user_structure".

"ID_Block(i)" represents Region_id(i). "2D_object_posion_flag" is a flag indicating whether or not to reference superimposing position information (information of display position for superimposing information for 2D) included as information for ID_Block(i). In the event that this flag is set, the superimposing position information is referred to. In this case, the information for ID_Block(i) includes superimposing position information ("Vertical_Position" and "Horizontal_Position"). "Vertical_Position" indicates the position in the vertical direction of the superimposing information for 2D. "Horizontal_Position" indicates the position in the horizontal direction of the superimposing information for 2D.

Control data of the superimposing position is included in the CC data output from the CC encoder 127 described above. Accordingly, in the event that the ID_Block(i) corresponds to closed caption information, the "2D_object_posion_flag" is not set. Also, superimposing position information ("Vertical_Position" and "Horizontal_Position") is not included as the information of the ID_Block(i).

A "3D_disparity_flag" indicates whether or not disparity information (disparity vector) is included as information of the ID_Block(i). In the event that this flag is set, this means that disparity information is included. "View_Vector_Vertical" indicates the vertical direction component of the disparity vector. "View_Vector_Horizontal" indicates the horizontal direction component of the disparity vector. Note that in this example, both "View_Vector_Vertical" and "View_Vector_Horizontal" are included. However, in the event of using just the horizontal direction component, just "View_Vector_Horizontal" may be included.

"Status_Count_flag" is a flag indicating whether or not to reference the display time information of the superimposing information as information of the ID_Block(i). In the event that this flag is set, this means to reference to the display time information. In this case, information indicating the frame count corresponding to the display duration time "Duration_Counter", for example, is included as information of the ID_Block(i). Display of the superimposing information is started by a time stamp of the system layer at the receiving side, with display of superimposing information (including effects of disparity information) is reset after the frame count corresponding to the display duration time elapses. Accordingly, there is no need to repeatedly send the same information for each picture.

Control data of display time is included within the CC data output from the CC encoder 127 described above. Accordingly, in the event that the ID_Block(i) corresponds to closed caption information, the "Status_Count_flag" is not set, and "Duration_Counter" is not included as information of the ID_Block(i).
While detailed description will be omitted, the transmission data generating unit 110C shown in this Fig. 19 is otherwise configured in the same way as the transmission data generating unit 110 shown in Fig. 2, and operates in the same way.

### [Another Configuration Example of Transmission Data Generating Unit]

The transmission data generating unit 110C shown in Fig. 19 has transmitted disparity information from the Z data unit 128 embedded in the video elementary stream as user data. However, it may be conceived to transmit the disparity information from the Z data unit 128 to the receiving side as an independent elementary stream.

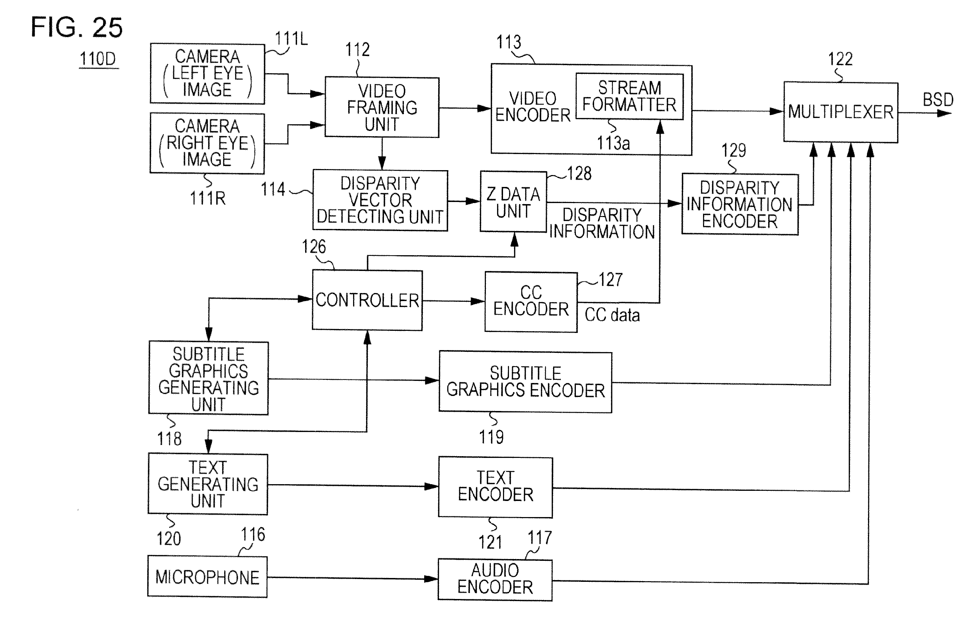

Fig. 25 illustrates a configuration example of a transmission data generating unit 110D. In Fig. 25, portions corresponding to Fig. 19 are denoted with the same reference numerals, and detailed description thereof will be omitted. The transmission data generating unit 110D has a disparity information encoder 129. The disparity information output from the Z data unit 128 (including DzD/DzD', and superimposing position information and display time information as necessary) for each Region_id is sent to the disparity information encoder 129.

A disparity information elementary stream including disparity information is generated at the disparity information encoder 129. The disparity information elementary stream is supplied to a multiplexer 122. The multiplexer 122 multiplexes the packets of the elementary streams supplied from the encoders including the disparity information encoder 129, thereby yielding bit stream data (transport stream) BSD as the transmitting data.

While detailed description will be omitted, the transmission data generating unit 110D shown in this Fig. 25 is otherwise configured in the same way as the transmission data generating unit 110 shown in Fig. 19, and operates in the same way.

### [Another Configuration Example of Transmission Data Generating Unit]

The transmission data generating unit 110B shown in Fig. 18 handles subtitle information, graphics information, and text information. A configuration can be conceived of further handling closed caption information with a configuration the same as the transmission data generating unit 110B shown in this Fig. 18.

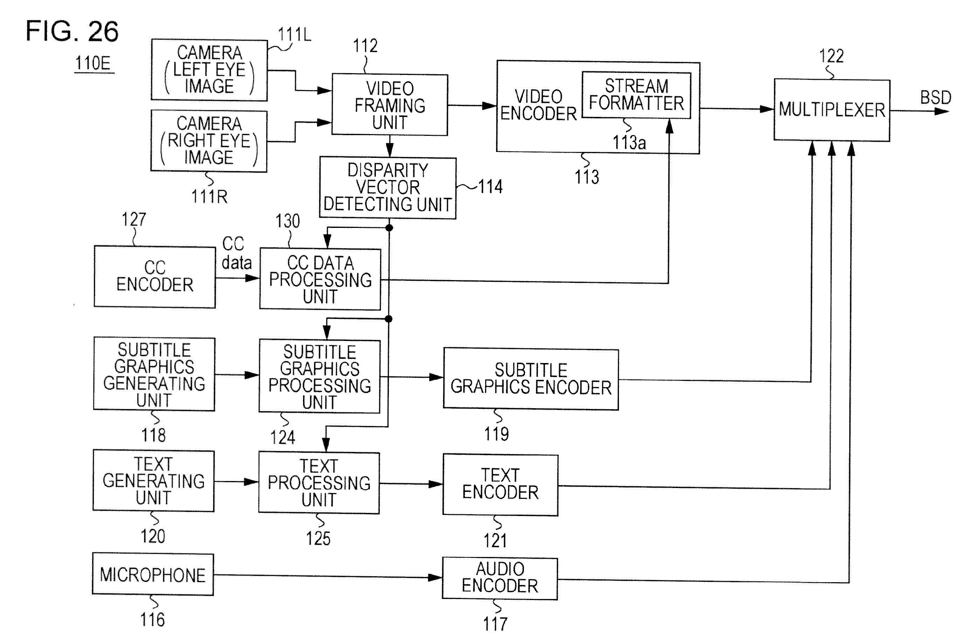

Fig. 26 illustrates a configuration example of a transmission data generating unit 110E. This example is of a configuration of reflecting disparity information in the data of the superimposing information (e.g., closed caption information, subtitle information graphics information text information, etc.) to be superimposed on the image, and transmitted, instead of transmitting disparity vectors as numerical information. In this Fig. 26, portions corresponding to Fig. 18 and Fig. 19 are denoted with the same reference numerals, and detailed description thereof will be omitted.

With the transmission data generating unit in this Fig. 26, a CC data processing unit 130 is introduced between the CC encoder 127 and the stream formatter 113a. The disparity vector at a predetermined position within the image that has been detected by the disparity vector detecting unit 114 is supplied to the CC data processing unit 130.

At the CC data processing unit 130, data of left eye closed caption information to be superimposed on a left eye image and data of right eye closed caption information to be superimposed on a right eye image are generated, based on the CC data generated at the CC encoder 127. In this case, the left eye closed caption information and right eye closed caption information is the same information. However, the superimposing position of the right eye closed caption information within the image is shifted in the horizontal direction by an amount equivalent to the horizontal direction component VVT of the disparity vector, for example.

Thus, the CC data following processing at the CC data processing unit 130 is supplied to the stream formatter 113a of the video encoder 113. At the stream formatter 113a, the CC data from the CC data processing unit 130 is embedded in the video elementary stream as user data.

While detailed description will be omitted, the transmission data generating unit 110E shown in this Fig. 26 is otherwise configured in the same way as the transmission data generating unit 110B shown in Fig. 18, and operates in the same way.

### [Description of Set Top Box]

Returning to Fig. 1, the set top box 200 receives bit stream data (transport stream) transmitted over broadcast waves from the broadcasting station 100. This bit stream data includes stereoscopic image data including left eye image data and right eye image data, audio data, superimposing information data, and further disparity information (disparity vector). Here, examples of the superimposing information data include closed caption data, subtitle data, graphics data, text data, and so forth.

The set top box 200 includes a bit stream processing unit 201. This bit stream processing unit 201 extracts stereoscopic image data, audio data, superimposing information data, a disparity vector, or the like from the bit stream data. This bit stream processing unit 201 uses stereoscopic image data, superimposing information data (subtitle data, graphics data, text data, CC (Closed Caption) data), or the like to generate a left eye image and a right eye image to which superimposing information is superimposed.

Here, in the event that a disparity vector is transmitted as numeric information, left eye superimposing information and right eye superimposing information to be superimposed on a left eye image and a right eye image are generated based on the disparity vector and superimposing information data. In this case, the left eye superimposing information and right eye superimposing information are the same superimposing information. However, with a superimposed position within an image, for example, the right eye superimposing information is arranged to be shifted in the horizontal direction by the horizontal direction component of the disparity vector as to the left eye superimposing information.

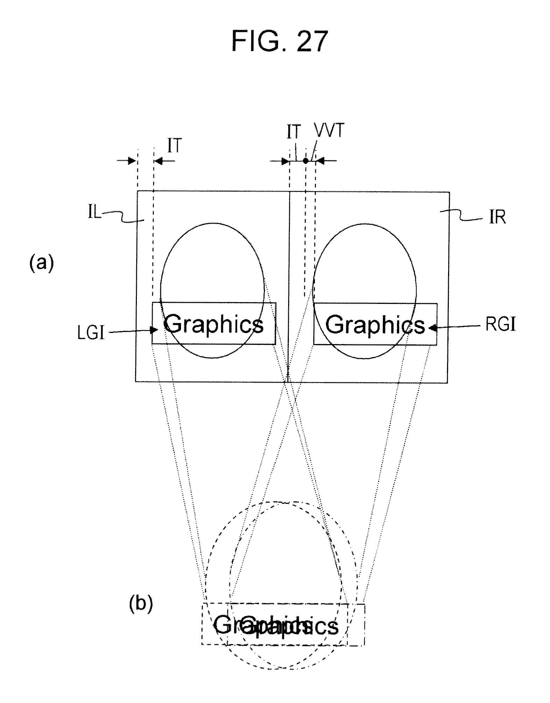

Fig. 27(a) illustrates the superimposed position of left eye graphics information and right eye graphics information in the event that the transmission method is the above second transmission method ("Side By Side" method). Right eye graphics information RGI to be superimposed on a right eye image IR is set to a position shifter to the horizontal direction by the horizontal direction component VVT of a disparity vector as to left eye graphics information LGI to be superimposed on a left eye image IL. Note that IT is an idling offset value.

With the bit stream processing unit 201, graphics data is generated so that the graphics information LGI and RGI are superimposed on images IL and IR respectively as illustrated in Fig. 27(a). The bit stream processing unit 201 synthesizes the generated left eye graphics data and right eye graphics data as to stereoscopic image data (left eye image data, right eye image data) extracted from the bit stream data to obtain stereoscopic image data after processing. According to this stereoscopic image data, the viewer can observe with disparity each of the graphics information LGI and RGI along with each of the images IL and IR, and perspective can also be recognized regarding the graphics information, as shown in Fig. 27(b).

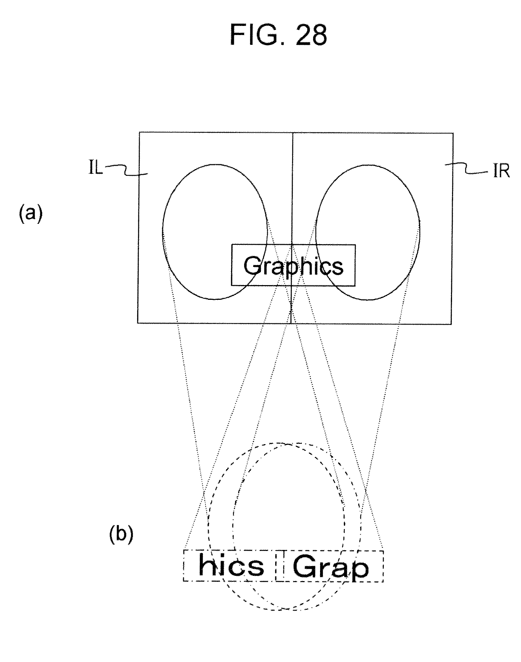

Note that Fig. 28(a) illustrates a state in which the graphics image according to the graphics data extracted from the bit stream data is superimposed on each of the images IL and IR as is. In this case, the viewer observes, as illustrated in Fig. 28(b), the left half of the graphics information along with the left eye image IL, and the right half of the graphics information along with the right eye image IR. Therefore, the viewer is prevented from correctly recognizing the graphics information.

Though Fig. 27 illustrates a case of the graphics information, this is also true regarding other superimposing information (closed caption information, subtitle information, text information, etc.). Specifically, in the event that a disparity vector is transmitted as numeric information, left eye superimposing information and right eye superimposing information to be superimposed a left eye image and a right eye image respectively are generated based on the disparity vector and superimposing information data data. In this case, the left eye superimposing information and right eye superimposing information are the same superimposing information. However, with the superimposed position within the image, for example, the right eye superimposing information is shifted in the horizontal direction by the horizontal direction component of the disparity vector as to the left eye superimposing information.

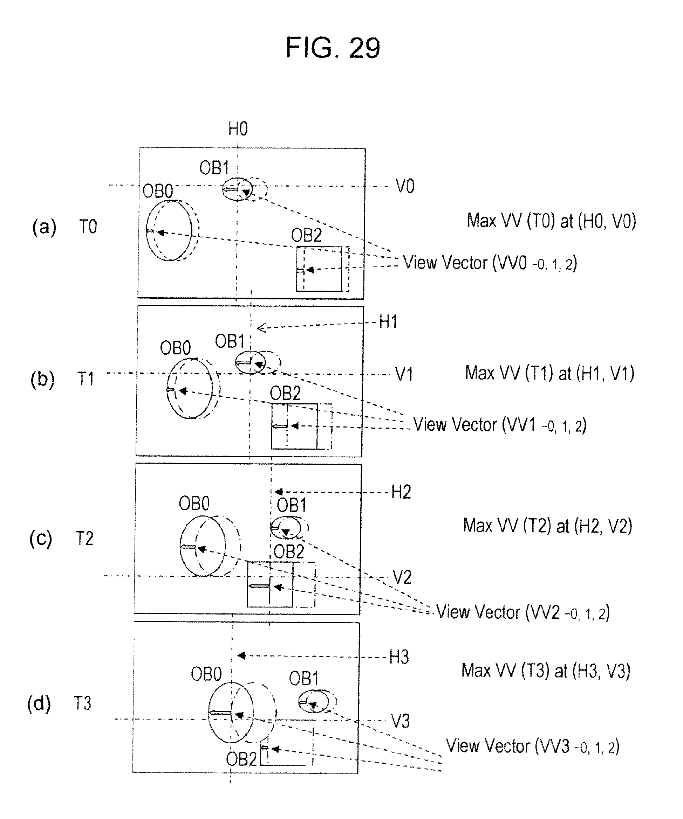

Here, it can be conceived to employ the following disparity vectors as a disparity vector for providing disparity between the left eye superimposing information and right eye superimposing information. For example, it can be conceived to employ, of disparity vectors detected in multiple positions within an image, the disparity vector in the position recognized as the nearest in respect of perspective. Fig. 29(a), (b), (c), and (d) illustrate the disparity vectors (View Vector) in three object positions at points-in-time T0, T1, T2, and T3, respectively.

At the point-in-time T0, a disparity vector VV0-1 in a position (H0, V0) corresponding to an object 1 is the maximum disparity vector MaxVV (T0). At the point-in-time T1, a disparity vector VV1-1 in a position (H1, V1) corresponding to the object 1 is the maximum disparity vector MaxVV (T1). At the point-in-time T2, a disparity vector W2-2 in a position (H2, V2) corresponding to an object 2 is the maximum disparity vector MaxVV (T2). At the point-in-time T3, a disparity vector VV3-0 in a position (H3, V3) corresponding to the object 1 is the maximum disparity vector MaxVV (T3).

In this way, of disparity vectors detected in multiple positions within an image, the disparity vector in the position recognized as the nearest in respect of perspective is employed as a disparity vector, whereby superimposing information can be displayed in front of the nearest object within the image in respect of perspective.

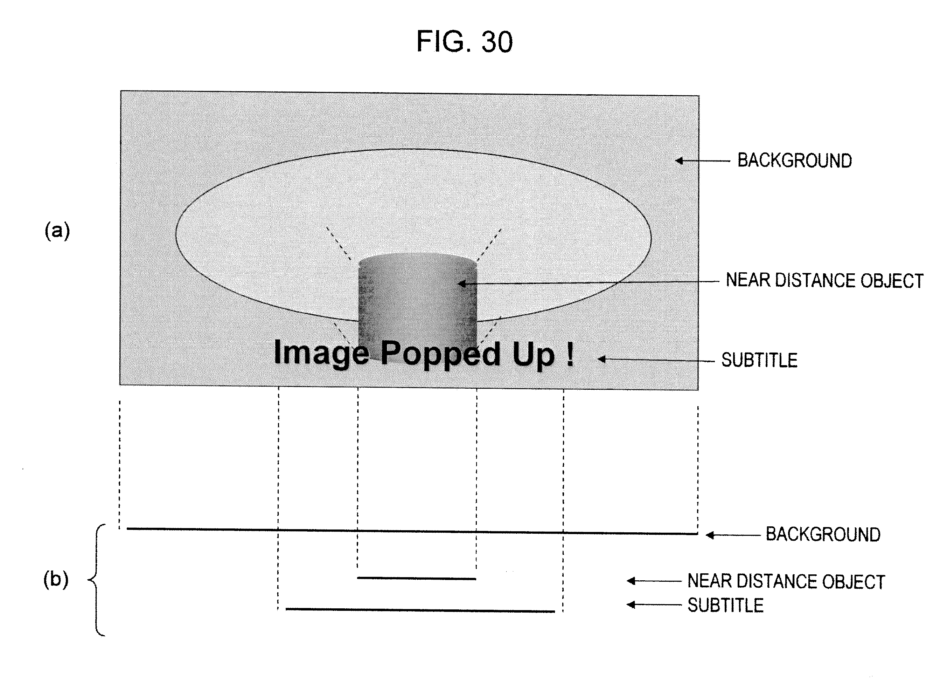

Fig. 30(a) illustrates a display example of a subtitle (e.g., closed caption information, subtitle information) on an image. This display example is an example wherein a subtitle is superimposed on an image made up of background and a close range object. Fig. 30(b) illustrates perspective of the background, close range object, and subtitle, of which the subtitle is recognized as the nearest.

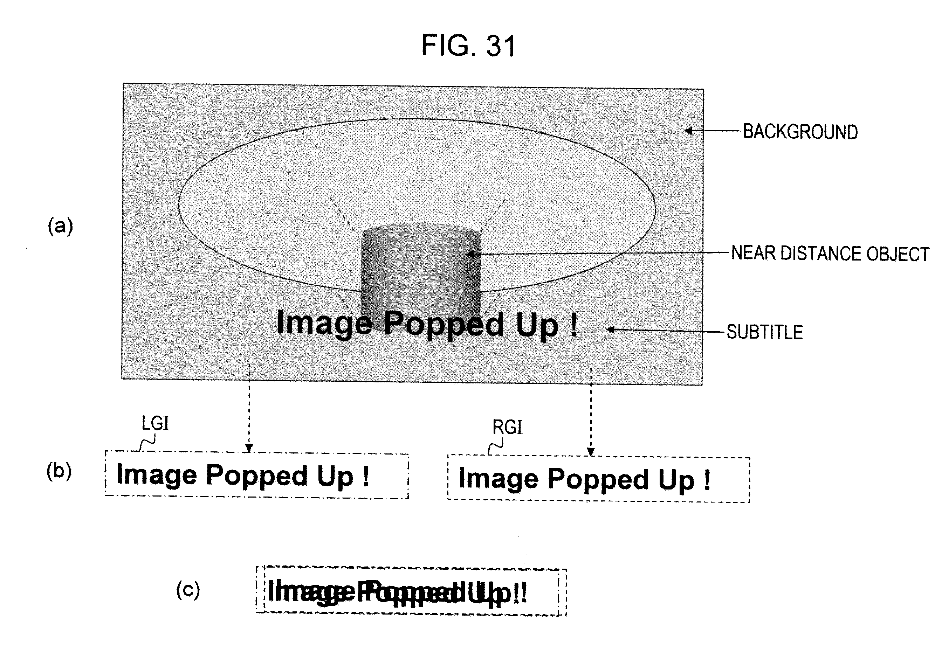

Fig. 31(a) illustrates a display example of a subtitle (e.g., closed caption information, subtitle information) on an image, which is the same as Fig. 30(a). Fig. 31(b) illustrates left eye subtitle information LGI and right eye subtitle information RGI for displaying a subtitle. Fig. 31(c) illustrates that a subtitle is recognized as the nearest, so disparity is given to each of the subtitle information LGI and RGI.

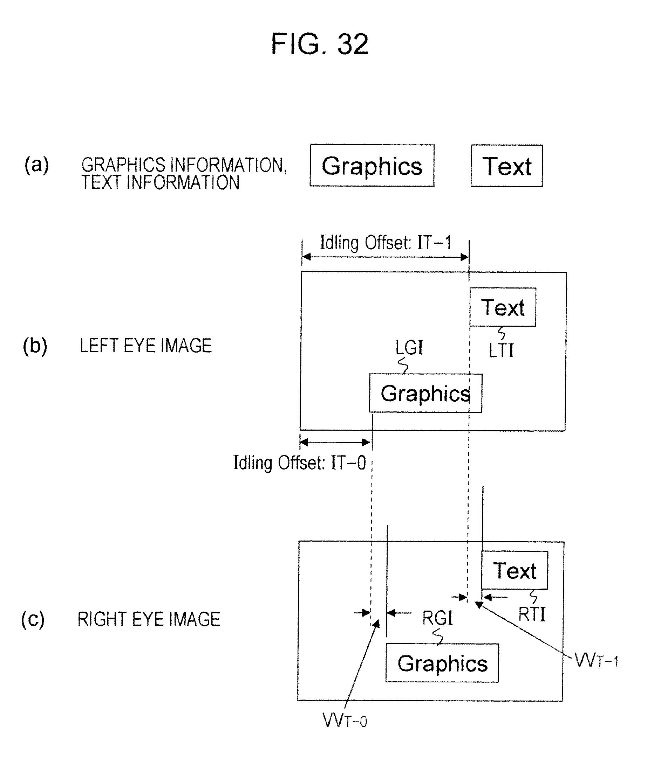

Also, it can be conceived that of disparity vectors detected in multiple positions within an image, the disparity vector corresponding to the superimposed position thereof is employed. Fig. 32(a) illustrates graphics information according to graphics data extracted from bit stream data, and text information according to text data extracted from the bit stream data.

Fig. 32(b) illustrates a state in which left eye graphics information LGI and left eye text information LTI are superimposed on a left eye image. In this case, with the left eye graphics information LGI, the superimposed position thereof is stipulated in the horizontal direction by an idling offset value (IT-0). Also, with the left text information LTI, the superimposed position thereof is stipulated in the horizontal direction by an idling offset value (IT-1).

Fig. 32(c) illustrates a state in which right eye graphics information RGI and right eye text information RTI are superimposed on a right eye image. In this case, with the right eye graphics information RGI, the superimposed position thereof is stipulated in the horizontal direction by an idling offset value (IT-0), and further shifted by the horizontal direction component VVT-0 of the disparity vector corresponding to this superimposed position as compared to the superimposed position of the left eye graphics information LGI. Also, with the right eye text information RTI, the superimposed position thereof is stipulated in the horizontal direction by an idling offset value (IT-1), and further shifted by the horizontal direction component VVT-1 of the disparity vector corresponding to this superimposed position as compared to the superimposed position of the left eye text information LTI.

With the above description, description has been made regarding a case where the graphics information according to the graphics data extracted from the bit stream data, or the text information according to the text data extracted from the bit stream data are superimposed on the left eye image and right eye image. In addition to this, a case can also be conceived where graphics data or text data is generated within the set top box 200, and these information is superimposed on the left eye image and right eye image.

Even in such a case, disparity can be provided between left eye graphics information and right eye graphics information, or between left eye text information and right eye text information by taking advantage of the disparity vector of a predetermined position within an image extracted from the bit stream data. Thus, with display of graphics information and text information, suitable perspective can be given wherein maintenance of consistency of perspective is realized between the perspective of each object within an image.

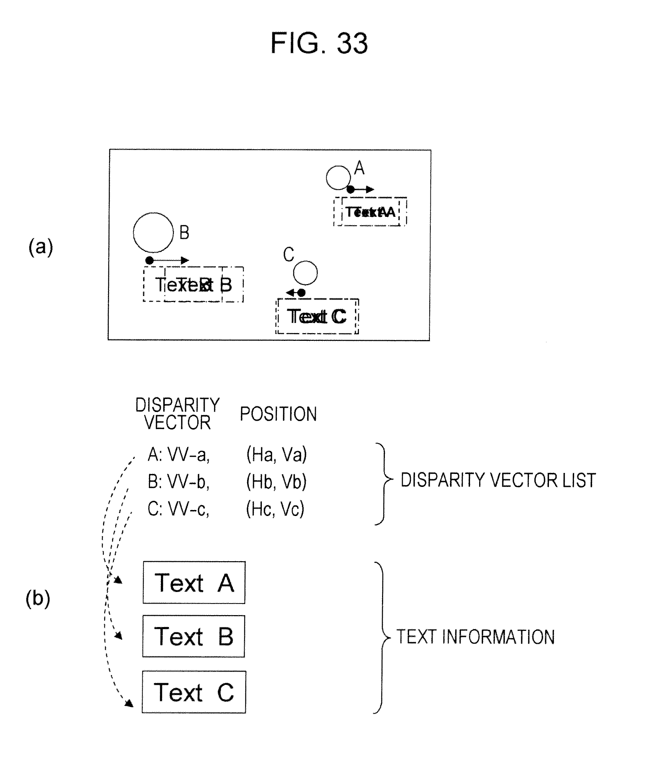

Fig. 33(a) illustrates that there are objects A, B, and C within an image, and for example, text information indicating the remarks of each object is superimposed in the adjacent position of each of the objects. Fig. 33(b) illustrates that disparity is given to text information indicating the remarks of each of objects A, B, and C by taking advantage of a disparity vector list indicating correspondence between the position of each of the objects A, B, and C and the disparity vector in the position thereof, and each of the disparity vectors. For example, the text information of "Text" is superimposed in the vicinity of the object A, but disparity corresponding to the disparity vector VV-a in the position (Ha, Va) of the object A is given between the left eye text information and the right eye text information. Note that the same holds for text information to be superimposed in the vicinity of the objects B and C.

Note that Fig. 32 illustrates a case where the superimposing information is graphics information and text information. Also, Fig. 33 illustrates a case where the superimposing information is text information. While detailed description will be omitted, this is also true in the event of other superimposing information (closed caption information, subtitle information, etc.).

Next, description will be made regarding a case where a disparity vector is reflected on the data of superimposing information (closed caption information, subtitle information, graphics information, text information, etc.) beforehand and transmitted. In this case, the superimposing information data extracted from the bit stream data includes the data of left eye superimposing information and right eye superimposing information to which disparity is given by a disparity vector.

Therefore, the bit stream processing unit 201 simply synthesizes the superimposing information data extracted from the bit stream data as to the stereoscopic image data (left eye image data, right eye image data) extracted from the bit stream data to obtain the stereoscopic image data after processing. Note that with regard to closed caption data or text data, processing for converting character code into bitmap data, or the like is necessary.

### [Configuration Example of Set Top Box]

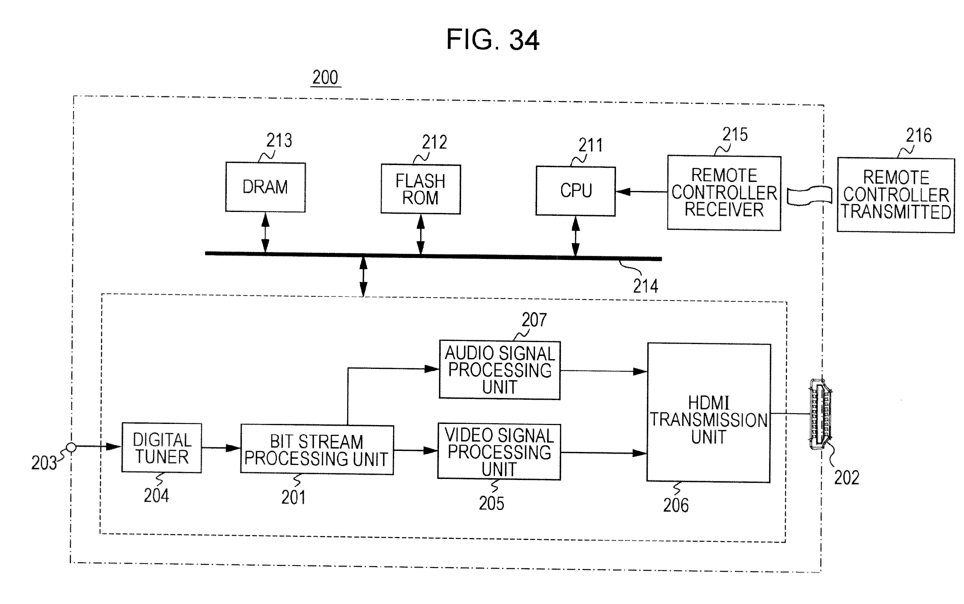

A configuration example of the set top box 200 will be described. Fig. 34 illustrates a configuration example of the set top box 200. This set top box 200 includes a bit stream processing unit 201, an HDMI terminal 202, an antenna terminal 203, a digital tuner 204, a video signal processing circuit 205, an HDMI transmission unit 206, and an audio signal processing circuit 207. Also, this set top box 200 includes a CPU 211, flash ROM 212, DRAM 213, internal bus 214, a remote control reception unit 215, and a remote control transmitter 216.

The antenna terminal 203 is a terminal for inputting television broadcasting signal received at a reception antenna (not illustrated). The digital tuner 204 processes the television broadcasting signal input to the antenna terminal 203, and outputs predetermined bit stream data (transport stream) corresponding to the user's selected channel.

As described above, the bit stream processing unit 201 extracts stereoscopic image data (left eye image data, right eye image data), audio data, superimposing information data, disparity information (disparity vector), or the like from the bit stream data. The superimposing information data is closed caption data, subtitle data, graphics data, text data, and so forth. This bit stream processing unit 201 synthesizes, as described above, the data of superimposing information (closed caption information, subtitle information, graphics information, text information, etc.) as to stereoscopic image data to obtain stereoscopic image data for display. Also, the bit stream processing unit 201 outputs audio data. The detailed configuration of the bit stream processing unit 201 will be described later.

The video signal processing circuit 205 subjects the stereoscopic image data output from the bit stream processing unit 201 to image quality adjustment processing according to need, and supplies the stereoscopic image data after processing thereof to the HDMI transmission unit 206. The audio signal processing circuit 207 subjects the audio data output from the bit stream processing unit 201 to audio quality adjustment processing according to need, and supplies the audio data after processing thereof to the HDMI transmission unit 206.

The HDMI transmission unit 206 transmits, according to communication conforming to the HDMI, the data of baseband image (video) and audio from the HDMI terminal 202. In this case, since the data is transmitted by the TMDS channel of the HDMI, the image and audio data are subjected to packing, and are output from the HDMI transmission unit 206 to the HDMI terminal 202. The details of this HDMI transmission unit 206 will be described later.

The CPU 211 controls the operation of each unit of the set top box 200. The flash ROM 212 performs storage of control software, and storage of data. The DRAM 213 configures the work area of the CPU 211. The CPU 211 loads the read software and data from the flash ROM 212 to the DRAM 213, and starts up the software to control each unit of the set top box 200.

The remote control reception unit 215 receives a remote control signal (remote control code) transmitted from the remote control transmitter 216, and supplies to the CPU 211. The CPU 211 controls each unit of the set top box 200 based on this remote control code. The CPU 211, flash ROM 212, and DRAM 213 are connected to the internal bus 214.

The operation of the set top box 200 will briefly be described. The television broadcasting signal input to the antenna terminal 203 is supplied to the digital tuner 204. With this digital tuner 204, the television broadcasting signal is processed, and predetermined bit stream data (transport stream) corresponding to the user's selected channel is output.

The bit stream data output from the digital tuner 204 is supplied to the bit stream processing unit 201. With this bit stream processing unit 201, stereoscopic image data (left eye image data, right eye image data), audio data, graphics data, text data, disparity vector, or the like is extracted from the bit stream data. Also, with this bit stream processing unit 201, the data of superimposing information (closed caption information, subtitle information, graphics information, text information, etc.) is synthesized as to the stereoscopic image data, and stereoscopic image data for display is generated.

The stereoscopic image data for display generated at the bit stream processing unit 201 is supplied to the HDMI transmission unit 206 after being subjected to image quality adjustment processing at the video signal processing circuit 205 according to need. Also, the audio data obtained at the bit stream processing unit 201 is supplied to the HDMI transmission unit 206 after being subjected to audio quality adjustment processing at the audio signal processing circuit 207 according to need. The stereoscopic image data and audio data supplied to the HDMI transmission unit 206 are transmitted from the HDMI terminal 202 to the HDMI cable 400 by the TMDS channel of the HDMI.

### [Configuration Example of Bit Stream Processing Unit]

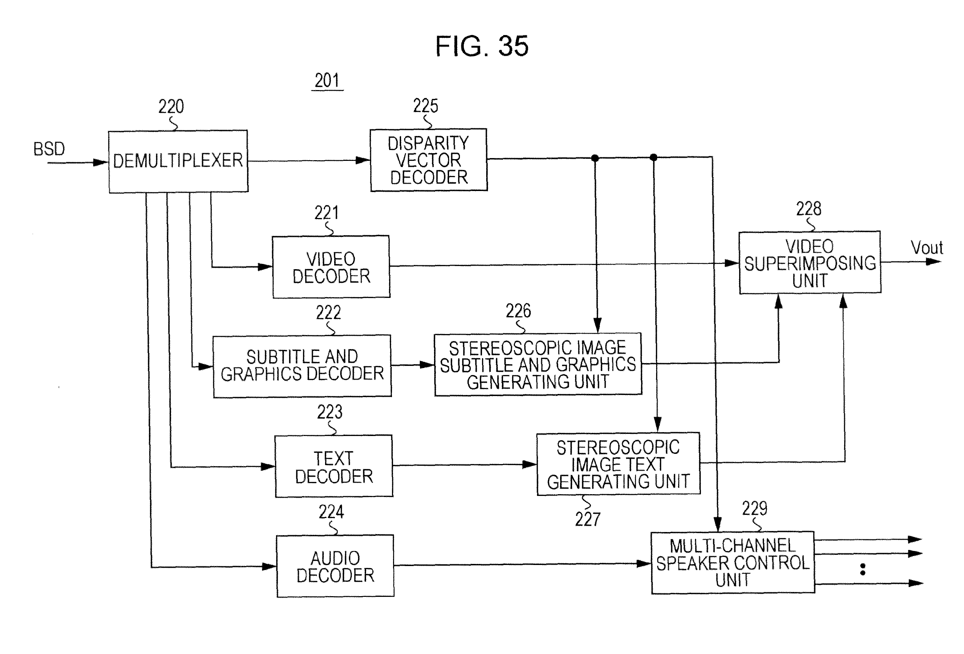

Fig. 35 illustrates a configuration example of the bit stream processing unit 201. This bit stream processing unit 201 is configured to correspond to the above transmission data generating unit 110 illustrated in Fig. 2. This bit stream processing unit 201 includes a demultiplexer 220, a video decoder 221, a subtitle and graphics decoder 222, a text decoder 223, an audio decoder 224, and a disparity vector decoder 225. Also, this bit stream processing unit 201 includes a stereoscopic image subtitle and graphics generating unit 226, a stereoscopic image text generating unit 227, a video superimposing unit 228, and a multichannel speaker control unit 229.

The demultiplexer 220 extracts the packets of video, audio, a disparity vector, a subtitle, graphics, and text from the bit stream data BSD, and transmits to each decoder.

The video decoder 221 performs processing reverse to the above video encoder 113 of the transmission data generating unit 110. Specifically, this video decoder 221 restructures a video elementary stream from the video packet extracted at the demultiplexer 220, performs decoding processing, and obtains stereoscopic image data including left eye image data and right eye image data. The transmission method of this stereoscopic image data is, for example, the above first transmission method ("Top & Bottom" method), second transmission method ("Side By Side" method), third transmission method ("Frame Sequential" method), or the like (see Fig. 4(a) through (c)).

The subtitle and graphics decoder 222 performs processing reverse to the above subtitle and graphics encoder 119 of the transmission data generating unit 110. Specifically, this subtitle and graphics decoder 222 restructures a subtitle or graphics elementary stream from a subtitle or graphics packet extracted at the demultiplexer 220. Subsequently, this subtitle and graphics decoder 222 further performs decoding processing to obtain subtitle data or graphics data.

The text decoder 223 performs processing reverse to the above text encoder 121 of the transmission data generating unit 110. Specifically, this text decoder 223 restructures a text elementary stream from a text packet extracted at the demultiplexer 220, performs decoding processing to obtain text data.

The audio decoder 224 performs processing reverse to the above audio encoder 117 of the transmission data generating unit 110. Specifically, this audio decoder 224 restructures an audio elementary stream from an audio packet extracted at the demultiplexer 220, performs decoding processing to obtain audio data.

The disparity vector decoder 225 performs processing reverse to the above disparity vector encoder 115 of the transmission data generating unit 110. Specifically, this disparity vector decoder 225 restructures a disparity vector elementary stream from a disparity vector packet extracted at the demultiplexer 220, performs decoding processing to obtain a disparity vector in a predetermined position within an image.

The stereoscopic image subtitle and graphics generating unit 226 generates left eye and left eye subtitle information or graphics information to be superimposed on a left eye image and a right eye image respectively. This generation processing is performed based on the subtitle data or graphics data obtained at the decoder 222, and the disparity vector obtained at the decoder 225. In this case, the left eye and left eye subtitle information or graphics information are the same information. However, with the superimposed position within the image, for example, the right eye subtitle information or graphics information is arranged to be shifted in the horizontal direction as to the left eye subtitle information or graphics information by an amount equivalent to the horizontal direction component of the disparity vector. Subsequently, stereoscopic image subtitle and graphics generating unit 226 outputs the data (bitmap data) of the generated left eye and left eye subtitle information or graphics information.

The stereoscopic image text generating unit 227 generates left eye text information and right eye text information to be superimposed on a left eye image and a right eye image respectively based on the text data obtained at the decoder 223, and the disparity vector obtained at the decoder 225. In this case, the left eye text information and right eye text information are the same text information, but with the superimposed position within an image, for example, the right eye text information is arranged to be shifted in the horizontal direction as to the left eye text information by an amount equivalent to the horizontal direction component of the disparity vector. Subsequently, stereoscopic image text generating unit 227 outputs the data (bitmap data) of the generated left eye text information and right eye text information.

The video superimposing unit 228 superimposes data generated at the generating units 226 and 227 on the stereoscopic image data (left eye image data, right eye image data) obtained at the video decoder 221 to obtain stereoscopic image data for display Vout. Note that superimposing of superimposing information data onto stereoscopic image data (left eye image data, right eye image data) is started by the timestamp of a system layer.

The multichannel speaker control unit 229 subjects the audio data obtained at the audio decoder 224 to processing for generating audio data of a multichannel speaker for realizing 5.1-ch surround or the like, processing for adding a predetermined acoustic field property, or the like. Also, this multichannel speaker control unit 229 controls the output of the multichannel speaker based on the disparity vector obtained at the decoder 225.

There is provided an advantage wherein the greater the size of a disparity vector becomes, the more stereoscopic effects are conspicuous. The multichannel speaker output is controlled according to a stereoscopic degree, whereby provision of further stereoscopic experience can be realized.

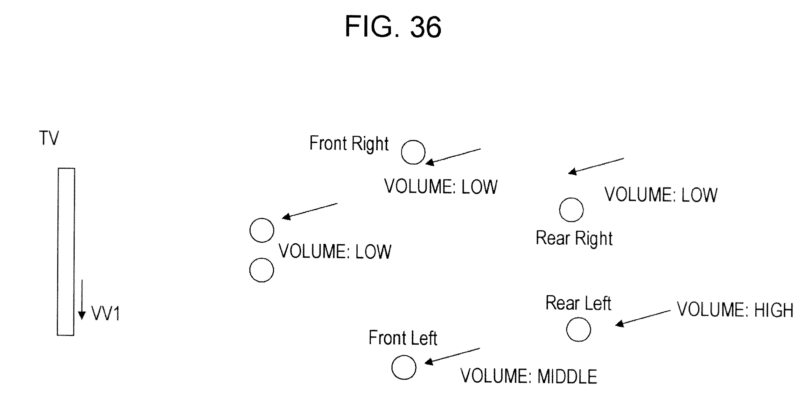

Fig. 36 illustrates a speaker output control example in the event that, with regard to a disparity vector VV1, a video object on the left side is greater toward a television display. With this control example, the speaker volume of Rear Left of the multichannel speaker is set to great, the speaker volume of Front Left is set to middle, and further, the speaker volume of Front Right, Rear Right is set to small. In this way, the disparity vector of a video content (stereoscopic image data) is applied to another media data such as audio data or the like at the reception side, whereby the viewer is allowed to physically sense stereoscopic effects in an integral manner.

The operation of the bit stream processing unit 201 illustrated in Fig. 35 will briefly be described. The bit stream data BSD output from the digital tuner 204 (see Fig. 34) is supplied to the demultiplexer 220. With this demultiplexer 220, the packets of video, audio, disparity vector, subtitle, graphics, and text are extracted from the bit stream data BSD, and are supplied to each decoder.

With the video decoder 221, a video elementary stream is restructured from the video packet extracted from the demultiplexer 220, further subjected to decoding processing, and stereoscopic image data including left eye image data and right eye image data is obtained. This stereoscopic image data is supplied to the video superimposing unit 228. Also, with the disparity vector decoder 225, a disparity vector elementary stream is restructured from the disparity vector packet extracted from the demultiplexer 220, further subjected to decoding processing, and a disparity vector in a predetermined position within an image (see Fig. 8).

With the subtitle and graphics decoder 222, a subtitle or graphics elementary stream is restructured from a subtitle or graphics packet extracted at the demultiplexer 220. With the subtitle and graphics decoder 222, the subtitle or graphics elementary stream is further subjected to decoding processing, and subtitle data or graphics data is obtained. This subtitle data or graphics data is supplied to the stereoscopic image subtitle and graphics generating unit 226. The disparity vector obtained at the disparity vector decoder 225 is also supplied to the stereoscopic image subtitle and graphics generating unit 226.

With the stereoscopic image subtitle and graphics generating unit 226, the data of left eye and right eye subtitle information or graphics information to be superimposed on a left eye image and a right eye image respectively is generated. This generation processing is performed based on the subtitle data and graphics data obtained at the subtitle and graphics decoder 222, and the disparity vector obtained at the decoder 225. In this case, with the superimposed position within the image, for example, the right eye subtitle information or graphics information is shifted in the horizontal direction as to the left eye subtitle information and left eye graphics information by the horizontal direction component of a disparity vector. The data (bitmap data) of the generated left eye and right eye subtitle information or graphics information is output from this stereoscopic image subtitle and graphics generating unit 226.

Also, with the text decoder 223, a text elementary stream from a text packet extracted at the demultiplexer 220 is restructured, further subjected to decoding processing, and text data is obtained. This text data is supplied to the stereoscopic image text generating unit 227. The disparity vector obtained at the disparity vector decoder 225 is also supplied to this stereoscopic image text generating unit 227.

With this stereoscopic image text generating unit 227, left eye text information and right eye text information to be superimposed on a left eye image and a right eye image respectively are generated based on the text data obtained at the decoder 223, and the disparity vector obtained at the decoder 225. In this case, the left eye text information and right eye text information are the same text information, but with the superimposed position within the image, the right eye text information is shifted into the horizontal direction as to the left eye text information by an amount equivalent to the horizontal direction component of the disparity vector. The data (bitmap data) of the generated left eye text information and right eye text information is output from this stereoscopic image text generating unit 227.

In addition to the above stereoscopic image data (left eye image data, right eye image data) from the video decoder 221, the data output from the subtitle and graphics generating unit 226 and text degenerating unit 227 is supplied to the video superimposing unit 228. With this video superimposing unit 228, the data generated at the subtitle and graphics generating unit 226 and text generating unit 227 is superimposed on the stereoscopic image data (left eye image data, right eye image data), stereoscopic image data for display Vout is obtained. This stereoscopic image data for display Vout is supplied to the HDMI transmission unit 206 (see Fig. 34) via the video signal processing circuit 205 as transmission image data.

Also, with the audio decoder 224, an audio elementary stream is restructured from an audio packet extracted from the demultiplexer 220, further subjected to decoding processing, and audio data is obtained. This audio data is supplied to the multichannel speaker control unit 229. With this multichannel speaker control unit 229, the audio data is subjected to processing for generating audio data of a multichannel speaker for realizing 5.1-ch surround or the like, processing for providing predetermined sound filed properties, or the like.

The disparity vector obtained at the disparity vector decoder 225 is also supplied to this multichannel speaker control unit 229. Subsequently, with this multichannel speaker control unit 229, output of the multichannel speaker is controlled based on the disparity vector. The multichannel audio data obtained at this multichannel speaker control unit 229 is supplied to the HDMI transmission unit 206 (see Fig. 34) via the audio signal processing circuit 207 as transmission audio data.

### [Another Configuration Example of Bit Stream Processing Unit]

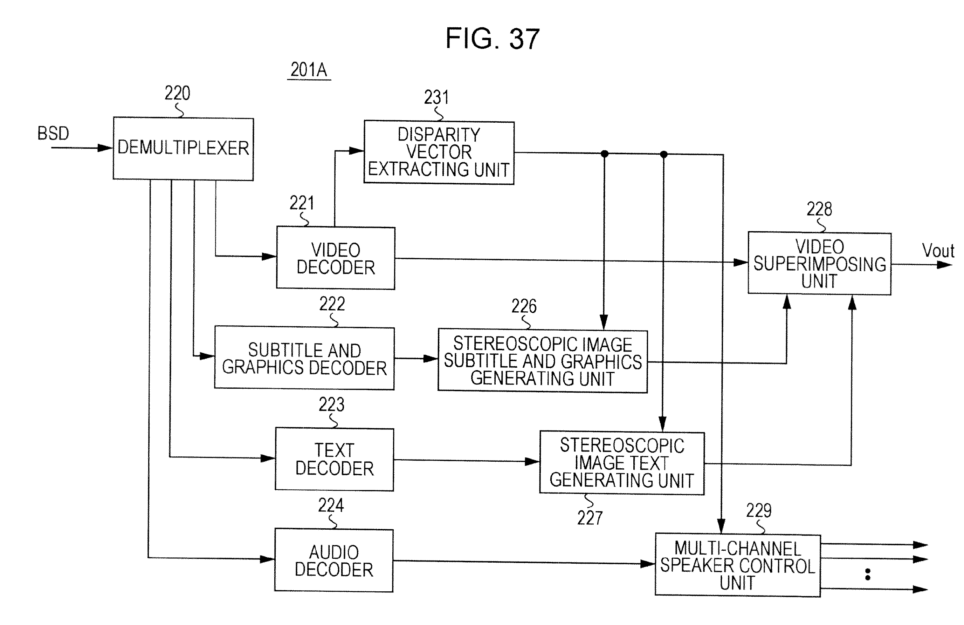

A bit stream processing unit 201A illustrated in Fig. 37 is configured to correspond to the above transmission data generating unit 110A illustrated in Fig. 13 above. In this Fig. 37, portions corresponding to Fig. 35 are denoted with the same reference numerals, and detailed description thereof will be omitted.

With this bit stream processing unit 201A, instead of the disparity vector decoder 255 of the bit stream processing unit 201 illustrated in Fig. 35, a disparity vector extracting unit 231 is provided. This disparity vector extracting unit 231 extracts from a video stream obtained through the video decoder 221 a disparity vector embedded in a user data region thereof. Subsequently, this disparity vector extracting unit 231 supplies the extracted disparity vector to the stereoscopic image subtitle and graphics generating unit 226, stereoscopic image text generating unit 227, and multichannel speaker control unit 229.

While detailed description will be omitted, the bit stream processing unit 201A illustrated in Fig. 37 is otherwise configured in the same way as with the bit stream processing unit 201 illustrated in Fig. 35, and operates in the same way.

### [Another Configuration Example of Bit Stream Processing Unit]

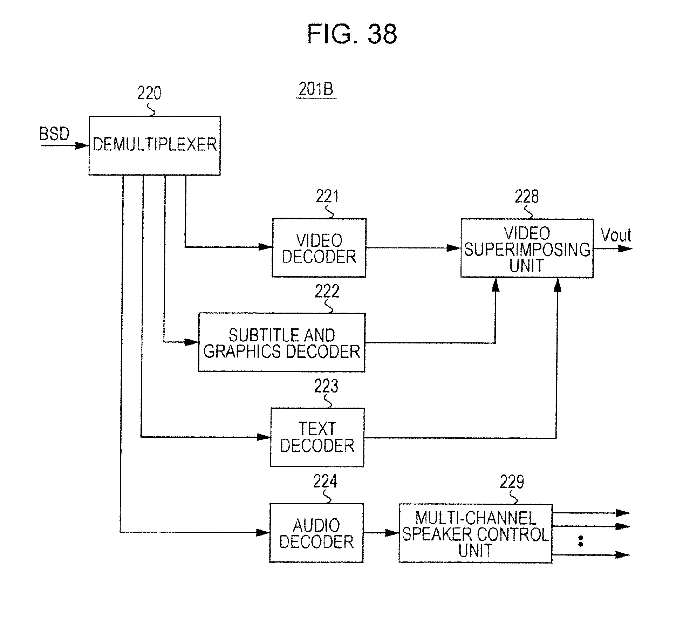

A bit stream processing unit 201B illustrated in Fig. 38 is configured to correspond to the above transmission data generating unit 110B illustrated in Fig. 18 above. In this Fig. 38, portions corresponding to Fig. 35 are denoted with the same reference numerals, and detailed description thereof will be omitted.

The bit stream processing unit 201B is of a configuration wherein the disparity vector decoder 225, stereoscopic image subtitle and graphics generating unit 226, and stereoscopic image text generating unit 227 have been removed from the bit stream processing unit 201 shown in Fig. 35. In this case, the disparity vector is reflected in the subtitle information, graphics information, and text information data beforehand.

The subtitle data and graphics data that is transmitted thereto includes the data of subtitle information and graphics information for the left eye that is superimposed on the left eye image, and data of subtitle information and graphics information for the right eye that is superimposed on the right eye image, as described above. In the same way, the text data that is transmitted thereto includes the data of text information for the left eye that is superimposed on the left eye image, and data of text information for the right eye that is superimposed on the right eye image, as described above. Accordingly, the disparity vector decoder 225, stereoscopic image subtitle and graphics generating unit 226, and stereoscopic image text generating unit 227 are unnecessary.

Note that the text data obtained at the text decoder 223 is code data (character data), so there is the need to perform processing to convert this into bitmap data. This processing is performed at that last step of the text decoder 223, or the input step of the video superimposing unit 228.

### [Another Configuration Example of Bit Stream Processing Unit]

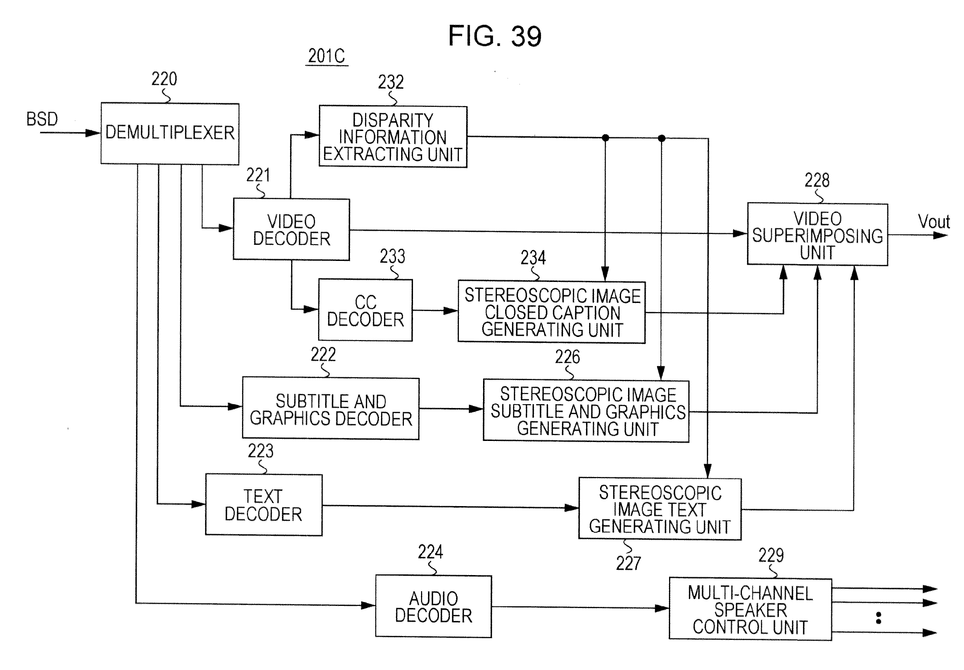

Also, a bit stream processing unit 201C illustrated in Fig. 39 is configured to correspond to the above transmission data generating unit 110B illustrated in Fig. 19 above. In this Fig. 39, portions corresponding to Fig. 35 are denoted with the same reference numerals, and detailed description thereof will be omitted.

This bit stream processing unit 201C has a disparity extracting unit 232, a CC encoder 233, and a stereoscopic image closed caption generating unit 234. As described above, CC (closed caption) data and disparity information for each Region_id is embedded as user data in the video elementary stream output from the video encoder 113 of the transmission data generating unit 110C shown in Fig. 19.

At the disparity extracting unit 232, disparity information for each Region_id is extracted from the video elementary stream obtained through the video decoder 221. Of the disparity information for each Region_id that has been extracted, the disparity information corresponding to closed caption information (not including superimposing position information and display time information) is supplied from the disparity extracting unit 232 to the stereoscopic image closed caption generating unit 234.

Also, of the disparity information for each Region_id that has been extracted, disparity information corresponding to subtitle information and graphics information (including superimposing position information and display time information) is supplied from the disparity extracting unit 232 to the stereoscopic image subtitle and graphics generating unit 226. Further, of the disparity information for each Region_id that has been extracted, disparity information corresponding to subtitle information and graphics information (including superimposing position information and display time information) is supplied from the disparity extracting unit 232 to the subtitle graphics generating unit 227.

At the CC decoder 233, CC data (closed caption data) is extracted from the video elementary stream obtained through the video decoder 233. Further, at the CC decoder 233, closed caption data (character code for subtitles) for each Window, and further control data of superimposing position and display time, are obtained from the CC data. The closed caption data and control data of superimposing position and display time are supplied from the CC decoder 233 to the stereoscopic image closed caption generating unit 234.

At the stereoscopic image closed caption generating unit 234, data for left eye closed caption information (subtitles) and data for right eye closed caption information (subtitles), to be superimposed on the left eye image and right eye image respectively, is generated for each Window. This generating processing is performed based on the closed caption data and control data of superimposing position and display time obtained at the CC decoder 233, and the disparity information (disparity vector) supplied from the disparity information extracting unit 232. In this case, the left eye and right eye closed caption information are the same, but with the superimposed position within the image, the right eye closed caption information is shifted into the horizontal direction by an amount equivalent to the horizontal direction component of the disparity vector.

Thus, the data of the left eye and right eye closed caption information (bitmap data) generated for each Window at the stereoscopic image closed caption generating unit 234 is supplied to the video superimposing unit 228 along with the control data of display time.

Also, at the stereoscopic image subtitle and graphics generating unit 226, left eye and left eye subtitle information and graphics information to be superimposed on the left eye image and right eye image is generated. This generation processing is performed based on the subtitle data and graphics data obtained at the subtitle and graphics decoder 222, and the disparity information supplied from the disparity information extracting unit 232. In this case, the left eye and left eye subtitle information and graphics information is the same. However, as for the superimposed position within the image, for example, the right eye subtitle information or graphics information is shifted in the horizontal direction by an amount equivalent to the horizontal direction component of the disparity vector as to the left eye subtitle information or graphics information.

Thus, the left eye and right eye subtitle information and graphics information data (bitmap data) generated at the stereoscopic image subtitle and graphics generating unit 234 is supplied to the video superimposing unit 228 along with the display time information (frame count information).

Also, at the stereoscopic image text generating unit 227, left eye and left eye text information to be superimposed on the left eye image and right eye image respectively, is generated. This generating processing is performed based on the text data obtained at the text decoder 223 and the disparity information supplied from the disparity information extracting unit 232. In this case, the left eye and left eye text information is the same. However, as for the superimposed position within the image, for example, the right eye text information is shifted in the horizontal direction as to the left eye text information by an amount equivalent to the horizontal direction component of the disparity vector.

Thus, the left eye and right eye text information data (bitmap data) generated at the stereoscopic image text generating unit 227 is supplied to the video superimposing unit 228 along with the display time information (frame count information).

At the video superimposing unit 228, the superimposing information data supplied from each decoder is superimposed on the stereoscopic image data (left eye image data, right eye image data) obtained at the video decoder 221, and display stereoscopic image data Vout is obtained. Note that the superimposing of the superimposing information data to the stereoscopic image data (left eye image data, right eye image data) is started by a timestamp of the system layer. Also, the superimposing duration time is controlled based on the control data of display time with regard to closed caption information and based on display time information regarding the subtitle information, graphics information, text information, and so forth.

While detailed description will be omitted, the bit stream processing unit 201C shown in this Fig. 39 is otherwise configured in the same way as the bit stream processing unit 201 shown in Fig. 35, and operates in the same way.

### [Another Configuration Example of Bit Stream Processing Unit]

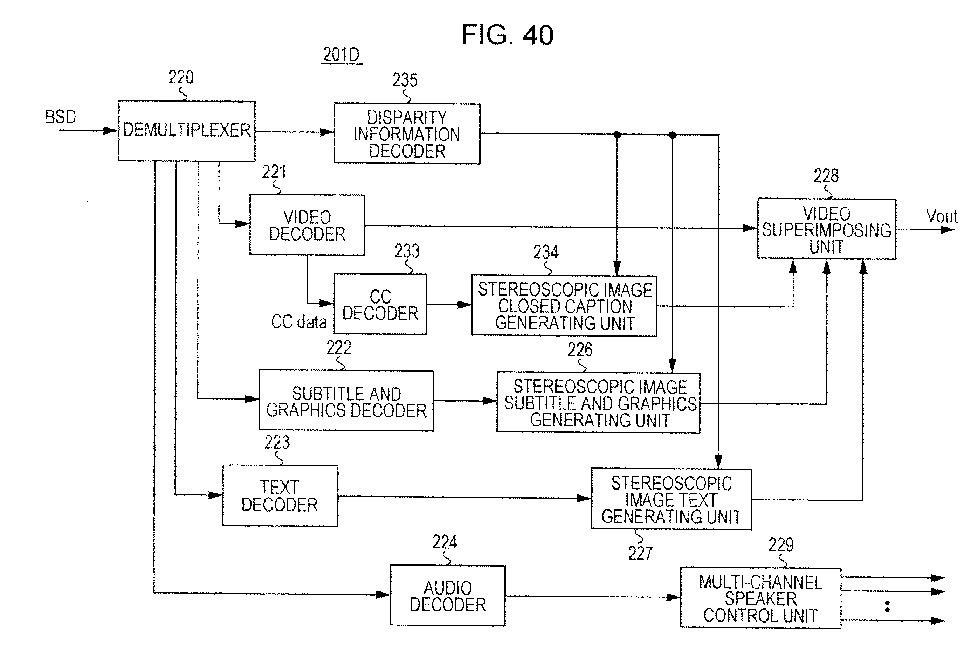

Also, a bit stream processing unit 201D illustrated in Fig. 40 is configured to correspond to the above transmission data generating unit 110D illustrated in Fig. 25 above. In this Fig. 40, portions corresponding to Fig. 35 and Fig. 9 are denoted with the same reference numerals, and detailed description thereof will be omitted.

The bit stream processing unit 201D has a disparity information extracting unit 235. With the transmission data generating unit 110D shown in Fig. 25, disparity information elementary stream including the disparity information from the Z data unit 128 is generated by the disparity information encoder 129. With the multiplexer 122, the packet of the elementary stream supplied from each encoder including the disparity information encoder 129 is multiplexed, and bit stream data (transport stream) BSD serving as transmission data is obtained.

At the disparity information decoder 235, the elementary stream of disparity information is reconstructed from the packets of disparity information extracted by the demultiplexer 220, and further decoding processing is performed, thereby obtaining disparity information for each Region_id. This disparity information is the same as the disparity information extracted by the disparity information extracting unit 232 of the bit stream processing unit 201C shown in Fig. 39.

At the disparity information extracting unit 235, disparity information for each Region_id is extracted from the video elementary stream obtained through the video decoder 221. Of the disparity information for each Region_id that has been extracted, the disparity information corresponding to closed caption information (not including superimposing position information and display time information) is supplied from the disparity information extracting unit 235 to the stereoscopic image closed caption generating unit 234.

Also, of the disparity information for each Region_id that has been extracted, disparity information corresponding to subtitle information and graphics information (including superimposing position information and display time information) is supplied from the disparity information extracting unit 235 to the stereoscopic image subtitle and graphics generating unit 226. Further, of the disparity information for each Region_id that has been extracted, disparity information corresponding to text information (including superimposing position information and display time information) is supplied from the disparity information extracting unit 235 to the stereoscopic image text generating unit 227.

While detailed description will be omitted, the bit stream processing unit 201D shown in this Fig. 40 is otherwise configured in the same way as the bit stream processing unit 201C shown in Fig. 39, and operates in the same way.

### [Another Configuration Example of Bit Stream Processing Unit]

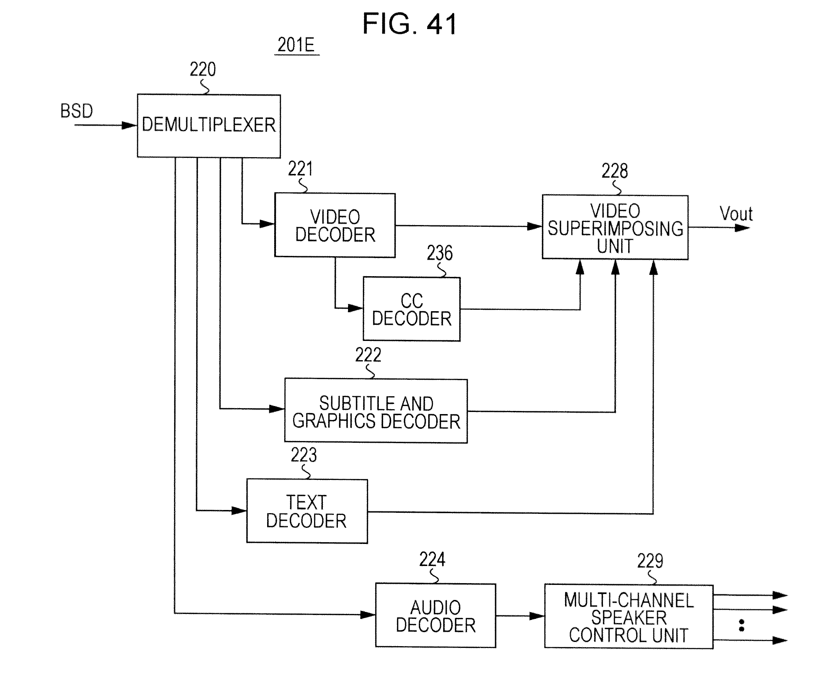

Also, a bit stream processing unit 201E illustrated in Fig. 41 is configured to correspond to the above transmission data generating unit 110E illustrated in Fig. 26 above. In this Fig. 41, portions corresponding to Fig. 35 and Fig. 38 are denoted with the same reference numerals, and detailed description thereof will be omitted.

The bit stream processing unit 201E has a CC decoder 236. At the CC data processing unit 130 of the transmission data generating unit 110E shown in Fig. 26, data of left eye closed caption information to be superimposed on a left eye image and data of right eye closed caption information to be superimposed on a right eye image are generated, based on the CC data. Then, the CC data following processing at the CC data processing unit 130 is supplied to the stream formatter 113a of the video encoder 113 and is embedded in the video elementary stream as user data.

At the CC decoder 236, the CC data is extracted from the video elementary stream obtained through the video decoder 221, and further, data of the left eye and right eye closed caption information for each Window is obtained from this CC data. The data of the left eye and right eye closed caption information obtained at this CC decoder 236 is supplied to the video superimposing unit 228.

At the video superimposing unit 228, the data generated at the CC decoder 236, subtitle and graphics decoder 222, and text decoder 223, is superimposed on the stereoscopic image data (left eye image data, right eye image data), and display stereoscopic image data Vout is obtained.

While detailed description will be omitted, the bit stream processing unit 201E shown in this Fig. 41 is otherwise configured in the same way as the bit stream processing unit 201B shown in Fig. 38, and operates in the same way.

### [Description of Television Receiver]

Returning to Fig. 1, the television receiver 300 receives stereoscopic image data transmitted from the set top box 200 via the HDMI cable 400. This television receiver 300 includes a 3D signal processing unit 301. This 3D signal processing unit 301 subjects the stereoscopic image data to processing (decoding processing) corresponding to the transmission method to generate left eye image data and right eye image data. Specifically, this 3D signal processing unit 301 performs processing reverse to the video framing unit 112 in the transmission data generating units 110, 110A, 110B, 110C, 110D, and 110E illustrated in Fig. 2, Fig. 13, Fig. 18, Fig. 19, Fig. 25, and Fig. 26. Subsequently, this 3D signal processing unit 301 obtains left eye image data and right eye image data making up the stereoscopic image data.

### [Configuration Example of Television Receiver]

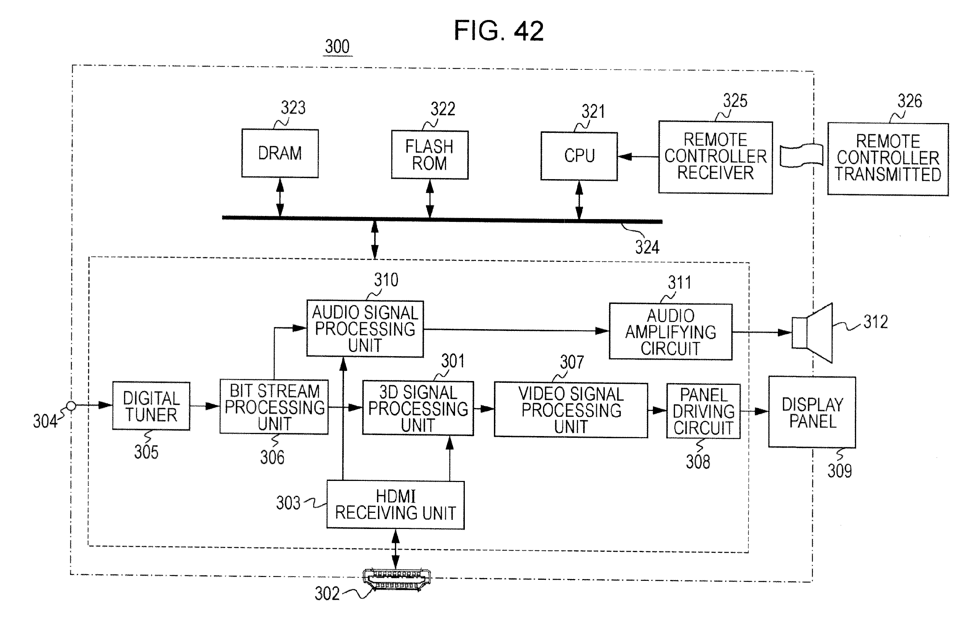

A configuration example of the television receiver 300 will be described. Fig. 42 illustrates a configuration example of the television receiver 300. This television receiver 300 includes a 3D signal processing unit 301, an HDMI terminal 302, an HDMI reception unit 303, an antenna terminal 304, a digital tuner 305, and a bit stream processing unit 306. Also, this television receiver 300 includes a video signal processing circuit 307, a panel driving circuit 308, a display panel 309, an audio signal processing circuit 310, an audio amplifier circuit 311, and a speaker 312. Also, this television receiver 300 includes a CPU 321, flash ROM 322, DRAM 323, internal bus 324, a remote control reception unit 325, and a remote control transmitter 326.

The antenna terminal 304 is a terminal for inputting a television broadcasting signal received at a reception antenna (not illustrated). The digital tuner 305 processes the television broadcasting signal input to the antenna terminal 304, and outputs predetermined bit stream data (transport stream) corresponding to the user's selected channel.

The bit stream processing unit 306 is configured in the same way as with the bit stream processing unit 201 of the set top box 200 illustrated in Fig. 34. This bit stream processing unit 306 extracts stereoscopic image data (left eye image data, right eye image data), audio data, superimposing information data, disparity vector (disparity information), and so forth, from bit stream data. The superimposing information data is closed caption data, subtitle data, graphics data, text data, or the like. This bit stream processing unit 306 synthesizes the superimposing information data as to the stereoscopic image data to obtain stereoscopic image data for display. Also, the bit stream processing unit 306 outputs audio data.

The HDMI reception unit 303 receives uncompressed image data (stereoscopic data) and audio data supplied to the HDMI terminal 302 via the HDMI cable 400 by communication conforming to the HDMI. The details of this HDMI reception unit 303 will be described later. The 3D signal processing unit 301 subjects the stereoscopic image data received at the HDMI reception unit 303 or obtained at the bit stream processing unit 306 to processing corresponding to the transmission method (decoding processing), to generate left eye image data and right eye image data.

The video signal processing circuit 307 generates image data for displaying a stereoscopic image based on the left eye image data and right eye image data generated at the 3D signal processing unit 301. Also, the video signal processing circuit subjects the image data to image quality adjustment processing according to need. The panel driving circuit 308 drives the display panel 309 based on the image data output from the video signal processing circuit 307. The display panel 309 is configured of, for example, an LCD (Liquid Crystal Display), PDP (Plasma Display Panel), or the like.

The audio signal processing circuit 310 subjects the audio data received at the HDMI reception unit 303 or obtained at the bit stream processing unit 306 to necessary processing such as D/A conversion or the like. The audio amplifier circuit 311 amplifies the audio signal output from the audio signal processing circuit 310, supplies to the speaker 312.

The CPU 321 controls the operation of each unit of the television receiver 300. The flash ROM 322 performs storing of control software and storing of data. The DRAM 323 makes up the work area of the CPU 321. The CPU 321 loads the software and data read out from the flash ROM 322 to the DRAM 323, starts up the software, and controls each unit of the television receiver 300.

The remote control unit 325 receives the remote control signal (remote control code) transmitted from the remote control transmitter 326, and supplies to the CPU 321. The CPU 321 controls each unit of the television receiver 300 based on this remote control code. The CPU 321, flash ROM 322, and DRAM 323 are connected to the internal bus 324.

The operation of the television receiver 300 illustrated in Fig. 42 will briefly be described. The HDMI reception unit 303 receives the stereoscopic image data and audio data transmitted from the set top box 200 connected to the HDMI terminal 302 via the HDMI cable 400. This stereoscopic image data received at this HDMI reception unit 303 is supplied to the 3D signal processing unit 301. Also, the audio data received at this HDMI reception unit 303 is supplied to the audio signal processing unit 310.

The television broadcasting signal input to the antenna terminal 304 is supplied to the digital tuner 305. With this digital tuner 305, the television broadcasting signal is processed, and predetermined bit stream data (transport stream) corresponding to the user's selected channel is output.

The bit stream data output from the digital tuner 305 is supplied to the bit stream processing unit 306. With this bit stream processing unit 306, stereoscopic image data (left eye image data, right eye image data), audio data, superimposing information data, disparity vector (disparity information), and so forth are extracted from the bit stream data. Also, with this bit stream processing unit 306, the data of superimposing information (closed caption information, subtitle information, graphics information, or text information) is synthesized as to the stereoscopic image data, and stereoscopic image data for display is generated.

The stereoscopic image data for display generated at the bit stream processing unit 306 is supplied to the 3D signal processing unit 301. Also, the audio data obtained at the bit stream processing unit 306 is supplied to the audio signal processing circuit 310.

With the 3D signal processing unit 301, the stereoscopic image data received at the HDMI reception unit 303 or obtained at the bit stream processing unit 306 is subjected to processing corresponding to the transmission method (decoding processing), and left eye image data and right eye image data are generated. The left eye image data and right eye image data are supplied to the video signal processing circuit 307. With this video signal processing circuit 307, based on the left eye image data and right eye image data, image data for displaying a stereoscopic image is generated. Accordingly, a stereoscopic image is displayed on the display panel 309.

Also, with the audio signal processing circuit 310, the audio data received at the HDMI reception unit 303 or obtained at the bit stream processing unit 306 is subjected to necessary processing such as D/A conversion or the like. This audio data is amplified at the audio amplifier circuit 311, and then supplied to the speaker 312. Therefore, audio is output from the speaker 312.

### [Configuration Example of HDMI Transmission Unit and HDMI Reception Unit]

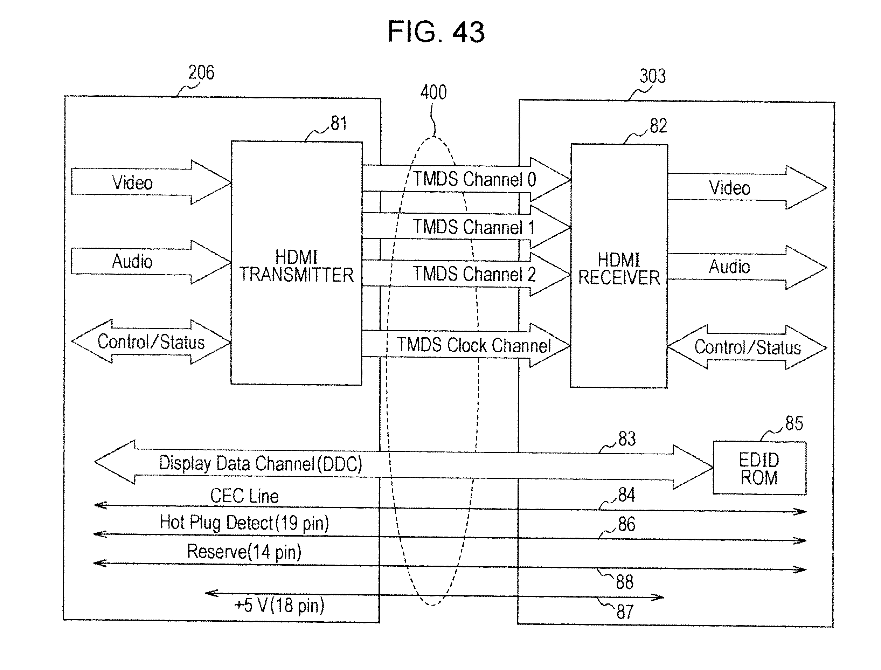

Fig. 43 illustrates, with the stereoscopic image display system 10 in Fig. 1, a configuration example of the HDMI transmission unit (HDMI source) 206 of the set top box 200, and the HDMI reception unit (HDMI sink) 303 of the television receiver 300.

The HDMI transmission unit 206 transmits differential signals corresponding to the pixel data of uncompressed one screen worth of image to the HDMI reception unit 303 in one direction during an effective image section (hereafter, also referred to as "active video section"), with multiple channels. Here, the effective image section is a section obtained by removing the horizontal blanking section and the vertical blanking section from a section between a certain vertical synchronizing signal and the next vertical synchronizing signal. Also, the HDMI transmission unit 206 transmits differential signals corresponding to the audio data, control data, other auxiliary data, and so forth, following at least an image, to the HDMI reception unit 303 in one direction using multiple channels during the horizontal blanking section or vertical blanking section.

The following transmission channels are provided as the transmission channels of the HDMI system made up of the HDMI transmission unit 206 and the HDMI reception unit 303. Specifically, there are three TMDS channels #0 through #2 serving as transmission channels for serially transmitting pixel data and audio data from the HDMI transmission unit 206 to the HDMI reception unit 303 in one direction in sync with pixel clock. Also, there is a TMDS clock channel serving as a transmission channel for transmitting pixel clock.

The HDMI transmission unit 206 includes an HDMI transmitter 81. The transmitter 81 converts, for example, the pixel data of an uncompressed image into corresponding differential signals, and serially transmits to the HDMI reception unit 303 connected via the HDMI cable 400 in one direction by the three TMDS channels #0, #1, and #2 which are multiple channels.

Also, the transmitter 81 converts audio data following an uncompressed image, further necessary control data and other auxiliary data, and so forth into corresponding differential signals, and serially transmits to the HDMI reception unit 303 in one direction by the three TMDS channels #0, #1, and #2.

Further, the transmitter 81 transmits pixel clock in sync with pixel data transmitted by the three TMDS channels #0, #1, and #2 to the HDMI reception unit 303 connected via the HDMI cable 400 using the TMDS clock channel. Here, with one TMDS channel #i (i = 0, 1, 2), 10-bit pixel data is transmitted during one clock of the pixel clock.

The HDMI reception unit 303 receives the differential signal corresponding to the pixel data transmitted from the HDMI transmission unit 206 in one direction during an active video section using the multiple channels. Also, this HDMI reception unit 303 receives the differential signals corresponding to the audio data and control data transmitted from the HDMI transmission unit 206 in one direction during the horizontal blanking section or vertical blanking section using the multiple channels.

Specifically, the HDMI reception unit 303 includes an HDMI receiver 82. This HDMI receiver 82 receives the differential signal corresponding to the pixel data, and the differential signals corresponding to the audio data and control data, transmitted from the HDMI transmission unit 206 in one direction, using the TMDS channels #0, #1, and #2. In this case, the HDMI receiver receives the differential signals in sync with the pixel clock transmitted from the HDMI transmission unit 206 by the TMDS clock channel.

The transmission channels of the HDMI system made up of the HDMI transmission unit 206 and HDMI reception unit 303 include, in addition to the above TMDS channels #0 through #2, transmission channels called a DDC (Display Data Channel) 83 and a CEC line 84. The DDC 83 is made up of unshown two signal lines included in the HDMI cable 400. The DDC 83 is used for the HDMI transmission unit 206 reading out E-EDID (Enhanced Extended Display Identification Data) from the HDMI reception unit 303.

Specifically, the HDMI reception unit 303 includes EDID ROM (Read Only Memory) 85 storing the E-EDID that is performance information relating to self performance (Configuration/capability) in addition to the HDMI receiver 81. The HDMI transmission unit 206 reads out the E-EDID via the DDC 83 from the HDMI reception unit 303 connected via the HDMI cable 400, for example, in response to a request from the CPU 211 (see Fig. 34). The HDMI transmission unit 206 transmits the read E-EDID to the CPU 211. The CPU 211 stores this E-EDID in the flash ROM 212 or DRAM 213.

The CPU 211 recognizes the performance settings of the HDMI reception unit 303 based on the E-EDID. For example, the CPU 211 recognizes the format of the image data which the television receiver 300 having the HDMI reception unit 303 can handle

### (resolution, frame rate, aspect, etc.)

The CEC line 84 is made up of one unshown signal line included in the HDMI cable 400, and is used for performing bidirectional communication of data for control between the HDMI transmission unit 206 and the HDMI reception unit 303. This CEC line 84 makes up a control data line.

Also, the HDMI cable 400 includes a line (HPD line) 86 connected to a pin called HPD (Hot Plug Detect). The source device can detect connection of the sink device by taking advantage of this line 86. Also, the HDMI cable 400 includes a line 87 used for supplying power from the source device to the sink device. Further, the HDMI cable 400 includes a reserve line 88.

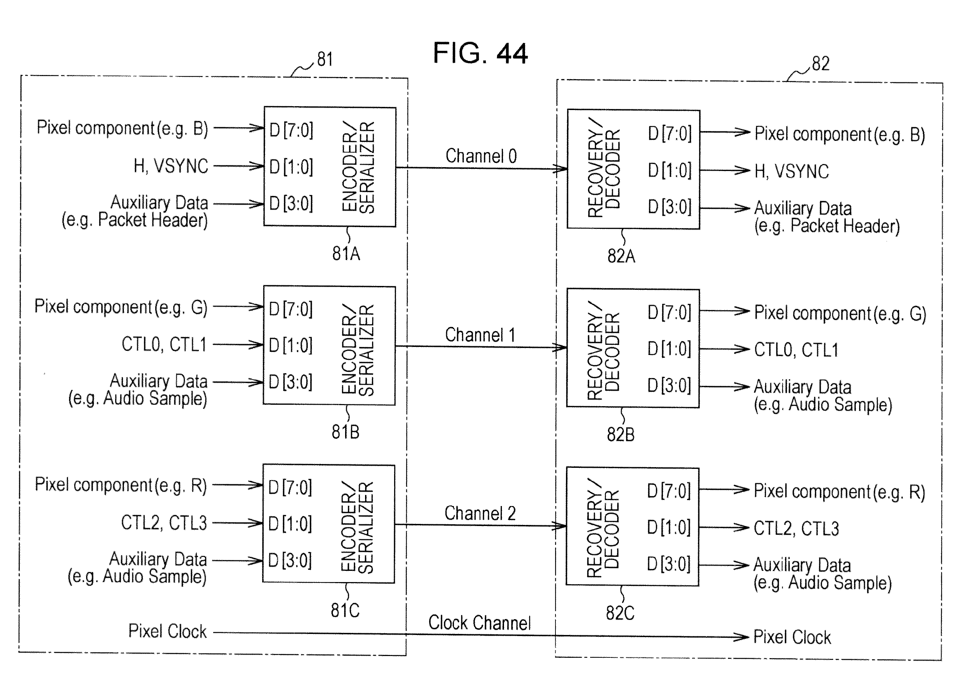

Fig. 44 illustrates a configuration example of the HDMI transmitter 81 and HDMI receiver 82 in Fig. 43. The HDMI transmitter 81 includes three encoders/serializers 81A, 81B, and 81C corresponding to the three TMDS channels #0, #1, and #2 respectively. Subsequently, each of the encoders/serializers 81A, 81B, and 81C encodes image data, auxiliary data, and control data supplied thereto, converts parallel data into serial data, and transmits by a differential signal. Now, in the event that the image data includes, for example, three components of R, G, and B, the B component is supplied to the encoder/serializer 81A, the G component is supplied to the encoder/serializer 81B, and the R component is supplied to the encoder/serializer 81C.

Also, examples of the auxiliary data include audio data and a control packet, the control packet is supplied, for example, to the encoder/serializer 81A, and the audio data is supplied to the encoders/serializers 81B and 81C. Further, as the control data, there are a 1-bit vertical synchronizing signal (VSYNC), a 1-bit horizontal synchronizing signal (HSYNC), and control bits CTL0, CTL1, CTL2, and CTL3 each made up of one 1 bit. The vertical synchronizing signal and horizontal synchronizing signal are supplied to the encoder/serializer 81A. The control bits CTL0 and CTL1 are supplied to the encoder/serializer 81B, and the control bits CTL2 and CTL3 are supplied to the encoder/serializer 81C.

The encoder/serializer 81A transmits the B component of the image data, vertical synchronizing signal, horizontal synchronizing signal, and auxiliary data, supplied thereto, in a time-sharing manner. Specifically, the encoder/serializer 81A takes the B component of the image data supplied thereto as parallel data in increments of 8 bits that is a fixed number of bits. Further, the encoder/serializer 81A encodes the parallel data thereof, converts into serial data, and transmits using the TMDS channel #0.

Also, the encoder/serializer 81A encodes the 2-bit parallel data of the vertical synchronizing signal and horizontal synchronizing signal supplied thereto, converts into serial data, and transmits using the TMDS channel #0. Further, the encoder/serializer 81A takes the auxiliary data supplied thereto as parallel data in increments of 4 bits. Subsequently, the encoder/serializer 81A encodes the parallel data thereof, converts into serial data, and transmits using the TMDS channel #0.

The encoder/serializer 81B transmits the G component of the image data, control bits CTL0 and CTL1, and auxiliary data, supplied thereto, in a time-sharing manner. Specifically, the encoder/serializer 81B takes the G component of the image data supplied thereto as parallel data in increments of 8 bits that is a fixed number of bits. Further, the encoder/serializer 81B encodes the parallel data thereof, converts into serial data, and transmits using the TMDS channel #1.

Also, the encoder/serializer 81B encodes the 2-bit parallel data of the control bits CTL0 and CTL1 supplied thereto, converts into serial data, and transmits using the TMDS channel #1. Further, the encoder/serializer 81B takes the auxiliary data supplied thereto as parallel data in increments of 4 bits. Subsequently, the encoder/serializer 81B encodes the parallel data thereof, converts into serial data, and transmits using the TMDS channel #1.

The encoder/serializer 81C transmits the R component of the image data, control bits CTL2 and CTL3, and auxiliary data, supplied thereto, in a time-sharing manner. Specifically, the encoder/serializer 81C takes the R component of the image data supplied thereto as parallel data in increments of 8 bits that is a fixed number of bits. Further, the encoder/serializer 81C encodes the parallel data thereof, converts into serial data, and transmits using the TMDS channel #2.

Also, the encoder/serializer 81C encodes the 2-bit parallel data of the control bits CTL2 and CTL3 supplied thereto, converts into serial data, and transmits using the TMDS channel #2. Further, the encoder/serializer 81C takes the auxiliary data supplied thereto as parallel data in increments of 4 bits. Subsequently, the encoder/serializer 81C encodes the parallel data thereof, converts into serial data, and transmits using the TMDS channel #2.

The HDMI receiver 82 includes three recoveries/decoders 82A, 82B, and 82C corresponding to the three TMDS channels #0, #1, and #2 respectively. Subsequently, each of the recoveries/decoders 82A, 82B, and 82C receives image data, auxiliary data, and control data transmitted by differential signals using the TMDS channels #0, #1, and #2. Further, each of the recoveries/decoders 82A, 82B, and 82C converts the image data, auxiliary data, and control data from serial data to parallel data, and further decodes and outputs these.

Specifically, the recovery/decoder 82A receives the B component of the image data, vertical synchronizing signal, horizontal synchronizing signal, and auxiliary data, transmitted by differential signals using the TMDS channel #0. Subsequently, the recovery/decoder 82A converts the B component of the image data, vertical synchronizing signal, horizontal synchronizing signal, and auxiliary data thereof from serial data to parallel data, and decodes and outputs these.

The recovery/decoder 82B receives the G component of the image data, control bits CTL0 and CTL1, and auxiliary data, transmitted by differential signals using the TMDS channel #1. Subsequently, the recovery/decoder 82B converts the G component of the image data, control bits CTL0 and CTL1, and auxiliary data thereof from serial data to parallel data, and decodes and outputs these.

The recovery/decoder 82C receives the R component of the image data, control bits CTL2 and CTL3, and auxiliary data, transmitted by differential signals using the TMDS channel #2. Subsequently, the recovery/decoder 82C converts the R component of the image data, control bits CTL2 and CTL3, and auxiliary data thereof from serial data to parallel data, and decodes and outputs these.

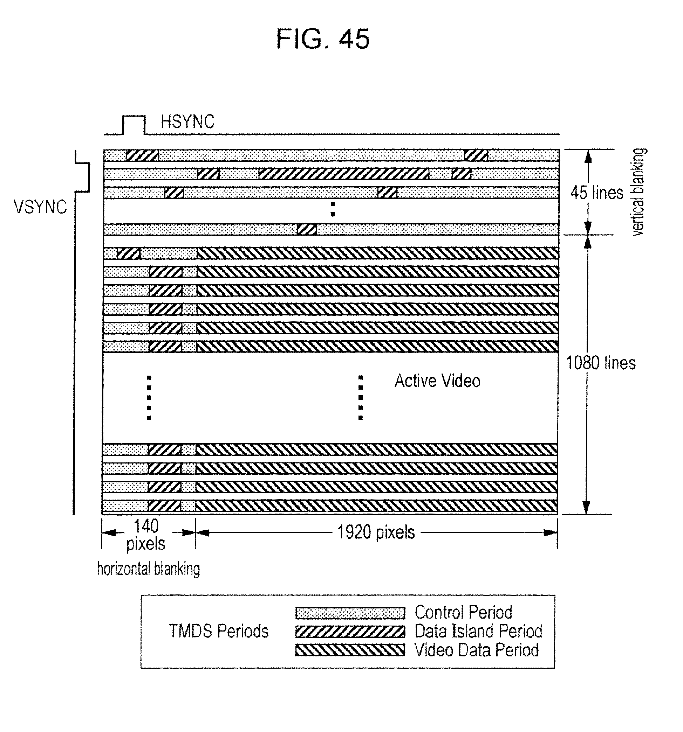

Fig. 45 illustrates a structure example of the TMDS transmission data. This Fig. 45 illustrates the sections of various types of transmission data in the event that image data with width x length of 1920 pixels x 1080 lines is transmitted using the TMDS channels #0, #1, and #2.

With a video field (Video Field) where transmission data is transmitted using the three TMDS channels #0, #1, and #2 of the HDMI, there are three types of sections according to the type of transmission data. These three types of sections are a video data section (Vide Data period), a data island section (Data Island period), and a control section (Control period).

Here, a video field section is a section from the leading edge (active edge) of a certain vertical synchronizing signal to the leading edge of the next vertical synchronizing signal. This video field section is divided into a horizontal blanking period (horizontal blanking), a vertical blanking period (vertical blanking), and an active video section (Active Video). This active video section is a section obtained by removing the horizontal blanking period and the vertical blanking period from the video field section.

The video data section is assigned to the active video section. With this video data section, the data of 1920 pixels x 1080 lines worth of effective pixels (Active pixels) making up uncompressed one screen worth of image data is transmitted.

The data island section and control section are assigned to the horizontal blanking period and vertical blanking period. With the data island section and control section, auxiliary data (Auxiliary data) is transmitted. That is to say, the data island section is assigned to a portion of the horizontal blanking period and vertical blanking period. With this data island section, of the auxiliary data, data not relating to control, e.g., the packet of audio data, and so forth are transmitted.

The control section is assigned to another portion of the horizontal blanking period and vertical blanking period. With this control section, of the auxiliary data, data relating to control, e.g., the vertical synchronizing signal and horizontal synchronizing signal, control packet, and so forth are transmitted.

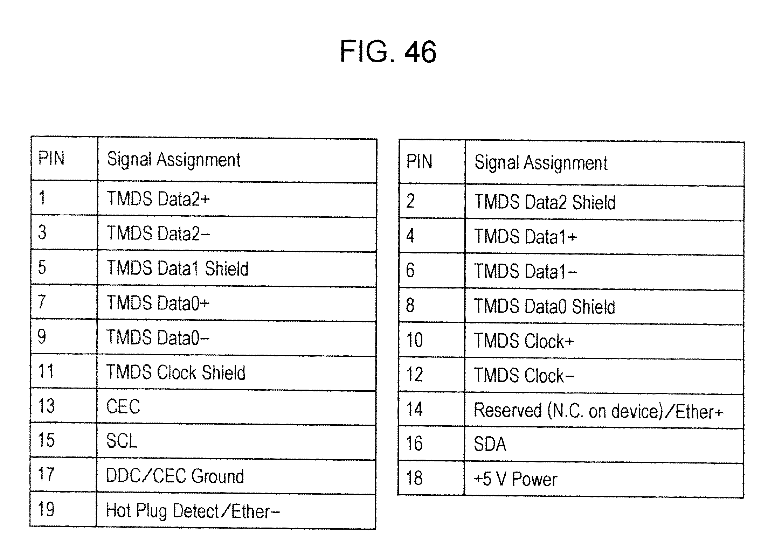

Fig. 46 illustrates an example of the pin alignment of the HDMI terminals 211 and 251. The pin alignment illustrated in Fig. 46 is called type A (type-A).

Two differential lines for transmitting differential signals of a TMDS channel #i are connected to pins to which the TMDS Data #i+ is assigned (pins having a pin number of 1, 4, or 7), and pins to which the TMDS Data #i- is assigned (pins having a pin number of 3, 6, or 9).

Also, the CEC line 84 where a CEC signal that is data for control is transmitted is connected to a pin of which the pin number is 13, and the pin with the pin number of 14 is an empty (Reserved) pin. Also, a line where an SDA (Serial Data) signal such as the E-EDID or the like is transmitted is connected to a pin of which the pin number is 16. Also, a line where an SCL (Serial Clock) signal that is a clock signal to be used for synchronization at the time of transmission/reception of the SDA signal is transmitted is connected to a pin of which the pin number is 15. The above DDC 83 is configured of a line where the SDA signal is transmitted, and a line where the SCL signal is transmitted.

Also, the HDP line 86 for the source device detecting connection of the sink device as described above is connected to a pin of which the pin number is 19. Also, the line 87 for supplying power supply as described above is connected to a pin of which the pin number is 18.

### [Example of TMDS Transmission Data in Each Method for Stereoscopic Image Data]

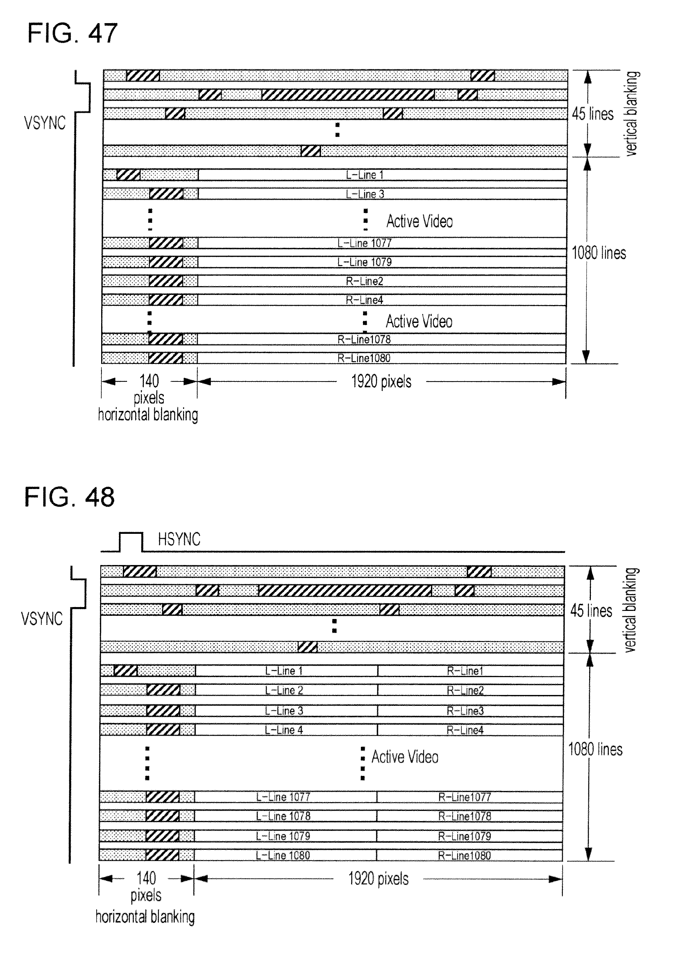

Now, an example of TMDS transmission data in the methods for stereoscopic image data will be described. Fig. 47 illustrates an example of TMDS transmission data in the first transmission method ("Top & Bottom" method). In this case, there is 1920 pixels (pixels) x 1080 lines worth of active pixel (Active pixel) data (synthesized data of left eye (L) image data and right eye (R) image data) in an active video period of 1920 pixels x 1080 lines. With this first method, the left eye image data and right eye image data each have the lines in the vertical direction thinned out to 1/2. Now, the left eye image data to be transmitted is either odd lines or even lines, and in the same way, the right eye image data to be transmitted is either odd lines or even lines.

Fig. 48 illustrates an example of TMDS transmission data in the second transmission method ("Side By Side" method). In this case, there is 1920 pixels (pixels) x 1080 lines worth of active pixel (Active pixel) data (synthesized data of left eye (L) image data and right eye (R) image data) in an active video period of 1920 pixels x 1080 lines. In the case of this second transmission method, the left eye image data and right eye image data each have the lines in the horizontal direction thinned out to 1/2, as described above.

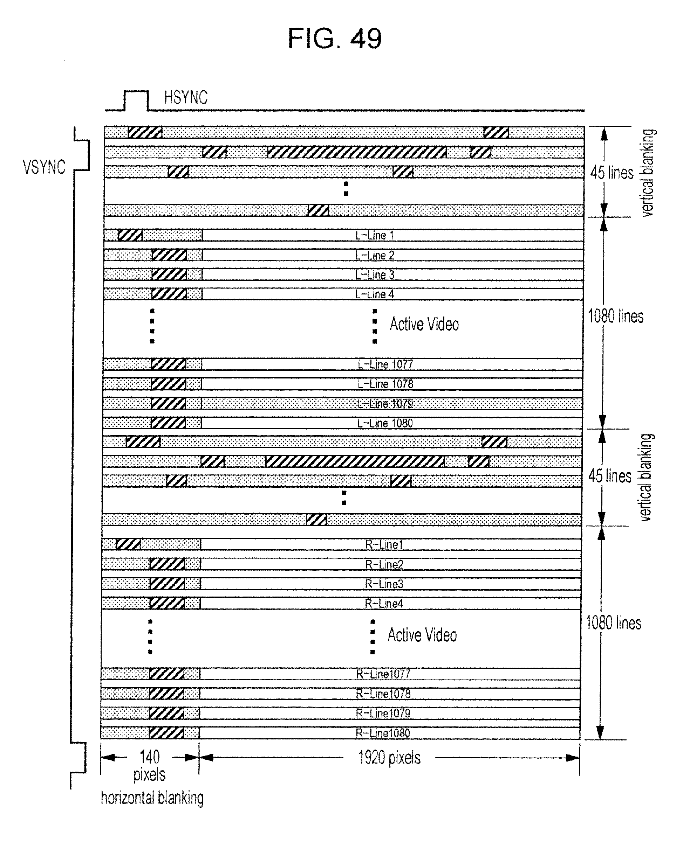

Fig. 49 illustrates an example of TMDS transmission data in the third transmission method ("Frame Sequential" method). In this case, there is 1920 pixels (pixels) x 1080 lines worth of active pixel (Active pixel) left eye (L) image data in an active video period of 1920 pixels x 1080 lines for an odd field. Also, there is 1920 pixels (pixels) x 1080 lines worth of active pixel (Active pixel) right eye (R) image data in an active video period of 1920 pixels x 1080 lines for an even field.

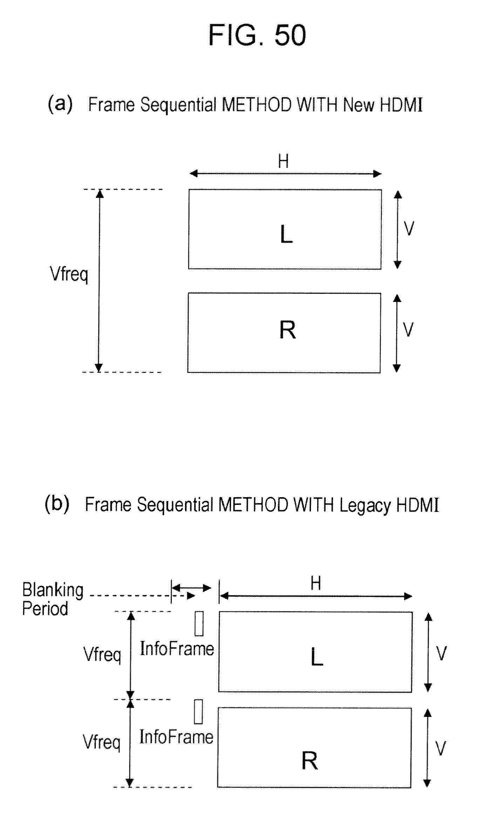

Note that the example of TMDS transmission data in the "Frame Sequential" method shown in Fig. 49 illustrates the "Frame Sequential" method for HDMI 1.4 (New HDMI). In this case, as shown in Fig. 50(a), the left eye image data is situated in the odd field, and the right eye image data is situated in the even field.

However, in the case of the "Frame Sequential" method for HDMI 1.3 (Legacy HDMI), as shown in Fig. 50(b), the left eye image data and right eye image data are transmitted in an alternating manner, each frame period Vfreq. In this case, the source device needs to transmit information (L, R signaling information) indicating which of the left eye image data and right eye image data the image data transmitted every frame is, to the sink device.

In the case of transmitting stereoscopic image data to the sink device with the "Top & Bottom" method, "Side By Side" method, or "Frame Sequential" method, the source device side instructs the method. Further, in the case of the "Frame Sequential" method, signaling is performed of L or R each frame.

For example, the following syntax is transmitted by newly defining one of Vendor Specific, or AVI InfoFrame, or Reserved, defined for blanking in the Legacy HDMI specifications.

In the case of HDMI 1.3, the following is defined as information transmitted in the blanking period.
InfoFrame Type # (8bits)
0x01: Vendor Specific
0x02: AVI InfoFrame
0x03: Source Product Description
0x04: Audio InfoFrame
0x05: MPEG Source
0x06 - 0xFF Reserved

Of these, one of Vendor Specific, or AVI InfoFrame, or unused region, is newly defined as follows.

```
 3DVideoFlag 1bit (0: 2D, 1: 3D)
 if (3DVideoFlag) {
            3DVideoFormat 3bits (0x0: Frame Packing Left View
                   0x1: Frame Packing Right View
                   0x2: Side by Side
                   0x4: Top & Bottom by Frame
                   Ox6: Top & Bottom by Field
                   0x3,5,7: Reserved)
     Reserved 4bits (0x0)
 }
 else {
     Reserved 7bits (0x0)
 }
```

Information (1-bit 3DvideoFlag information) for switching between 3-dimensional image data (stereoscopic image data) and 2-dimensional image data is included in the above information. Also, information (3-bit 3DvideoFormat information) for instructing the format of the 3-dimensional image data or switching between left eye image data and right eye image data is included in the above information.

Note that this information should be defined in auxiliary information sent in the picture header or at a timing equivalent thereto, in the bit stream regarding which similar content is broadcast. In this case, one or the other of 3-dimensional image data (stereoscopic image data made up of left eye image data and right eye image data) and 2-dimensional image data is included in this bit stream.
At the reception device (set top box 200), this signaling information is sent to the digital interface downstream upon receiving the stream, whereby accurate 3D conversion can be performed at the display (television receiver 300).

The receiver may be arranged such that, when the switchover information (1-bit 3DvideoFlag information) indicates 3-dimensional image data, software for processing the 3-dimensional image data included in the data stream is downloaded from an external device such as a broadcasting server or the like, and installed.

For example, in order to transmit the above-described 3D information, there is the need to handle this by adding to a system compatible with HDMI 1.3, or update software of a system compatible with HDMI 1.4. Accordingly, at the time of updating software, for example, software relating to firmware and middleware necessary for transmitting the above 3D information is the object of update.

As described above, with the stereoscopic image display system 10 shown in Fig. 1, disparity is provided to the same superimposed information (closed caption information, subtitle information, etc.) to be superimposed on a left eye image and right eye image, based on disparity information. Accordingly, that which has been subjected to disparity adjustment in accordance with the perspective of the objects (objects) within the image can be used as the same superimposing information to be superimposed on the left eye image and the right eye image, and consistency of perspective can be maintained between the objects in the image in the display of superimposing information.

### <2. Modification>

Note that with the above-described embodiment, a disparity vector of a predetermined position within the image is transmitted from the broadcasting station 100 side to the set top box 200. In this case, the set top box 200 does not need to obtain disparity vectors based on the left eye image data and right eye image data included in the received stereoscopic image, and processing of the set top box 200 is simplified.

However, it can be conceived to dispose a disparity vector detecting unit equivalent to the disparity vector detecting unit 114 in the transmission data generating unit 110 in Fig. 2, to the reception side of the stereoscopic image data, which is the set top box 200 in the above-described embodiment. In this case, processing using disparity vectors can be performed even if disparity vectors are not sent.

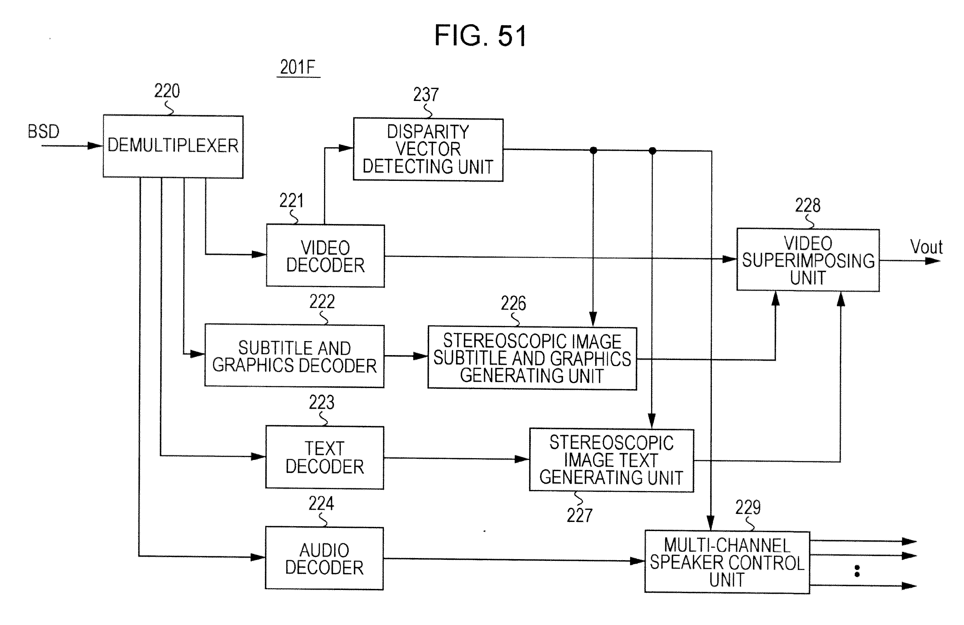

Fig. 51 illustrates a configuration example of a bit stream processing unit 201F provided to the set top box 200, for example. In this Fig. 51, portions corresponding to Fig. 35 are denoted with the same reference numerals, and detailed description thereof will be omitted. With this bit stream processing unit 201F, a disparity vector detecting unit 237 is provided instead of the disparity vector detecting unit 225 in the bit stream processing unit 201 shown in Fig. 35.

This disparity vector detecting unit 237 detects disparity vectors at a predetermined position within the image, based on the left eye image data and right eye image data making up the stereoscopic image data obtained at the video decoder 221. The disparity vector detecting unit 237 then supplies the detected disparity vectors to the stereoscopic image subtitle and graphics generating unit 226, stereoscopic image text generating unit 227, and multichannel speaker control unit 229.

While detailed description will be omitted, the bit stream processing unit 201F illustrated in Fig. 51 is otherwise configured in the same way as with the bit stream processing unit 201 illustrated in Fig. 35, and operates in the same way.

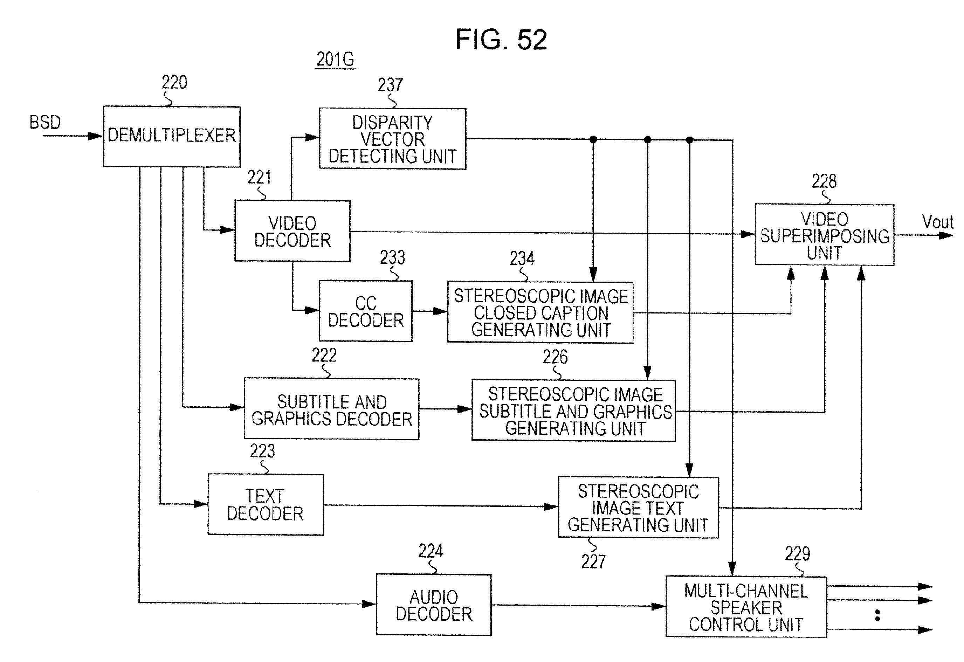

Also, Fig. 52 illustrates a another configuration example of a bit stream processing unit 201G provided to the set top box 200, for example. In this Fig. 52, portions corresponding to Fig. 35 and Fig. 39 are denoted with the same reference numerals, and detailed description thereof will be omitted. With this bit stream processing unit 201G, the disparity vector detecting unit 237 is provided instead of the disparity vector detecting unit 225 in the bit stream processing unit 201C shown in Fig. 39.

This disparity vector detecting unit 237 detects disparity vectors at a predetermined position within the image, based on the left eye image data and right eye image data making up the stereoscopic image data obtained at the video decoder 221. The disparity vector detecting unit 237 then supplies the detected disparity vectors to the stereoscopic image closed caption generating unit 234, stereoscopic image subtitle and graphics generating unit 226, stereoscopic image text generating unit 227, and multichannel speaker control unit 229.

While detailed description will be omitted, the bit stream processing unit 201G illustrated in Fig. 52 is otherwise configured in the same way as with the bit stream processing unit 201C illustrated in Fig. 39, and operates in the same way.

Also, with the above-described embodiment, an arrangement has been shown in which the stereoscopic image display system 10 is configured of the broadcasting station 100, set top box 200, and television receiver 300. However, as shown in Fig. 42, the television receiver 300 has a bit stream processing unit 306 which functions equivalently with the bit stream processing unit 201 in the set top box 200. Accordingly, a stereoscopic image display system 10A such as shown in Fig. 53 may be conceived which is configured of the broadcasting station 100 and television receiver 300.

Also, with the above-described embodiment, an arrangement has been shown in which a data stream (bit stream data) including stereoscopic image data is broadcast from the broadcasting station 100. However, this invention can similarly be applied to systems of a configuration where the data stream is distributed to a reception terminal using a network such as the Internet, as a matter of course.

Note that this application references Japanese Patent Application No. 2009-153686.

### Industrial Applicability

The present invention can be applied to a stereoscopic image display system which superimposes superimposing information such as graphics information, text information and so forth on an image and displays this, and so forth.

### Reference Signs List

- 10, 10A: stereoscopic image display system
- 100: broadcasting station
- 110, 110A through 110E: transmission data generating unit
- 111L, 111R: camera
- 112: video framing unit
- 113: video encoder
- 113a: stream formatter
- 114: disparity vector detecting unit
- 115: disparity vector encoder
- 116: microphone
- 117: audio encoder
- 118: subtitle and graphics generating unit
- 119: subtitle and graphics encoder
- 120: text generating unit
- 121: text encoder
- 122: multiplexer
- 124: subtitle and graphics processing unit
- 125: text processing unit
- 126: controller
- 127: CC encoder
- 128: Z data unit
- 129: disparity information encoder
- 130: CC data processing unit
- 200: set top box
- 201, 201A to 201G: bit stream processing unit
- 202: HDMI terminal
- 203: antenna terminal
- 204: digital tuner
- 205: video signal processing circuit
- 206: HDMI transmission unit
- 207: audio signal processing circuit
- 211: CPU
- 212: flash ROM
- 213: DRAM
- 214: internal bus
- 215: remote control reception unit
- 216: remote control transmitter
- 220, 220A: demultiplexer
- 221: video decoder
- 222: subtitle and graphics decoder
- 223: text decoder
- 224: audio decoder
- 225: disparity vector decoder
- 226: stereoscopic image subtitle and graphics generating unit
- 227: stereoscopic image text generating unit
- 228: video superimposing unit
- 229: multi-channel speaker control unit
- 231: disparity vector extracting unit
- 232: disparity vector extracting unit
- 233: CC encoder
- 234: stereoscopic image closed caption generating unit
- 235: disparity information extracting unit
- 236: CC decoder
- 237: disparity information detecting unit
- 300: television receiver
- 301: 3D signal processing unit
- 302: HDMI terminal
- 303: HDMI reception unit
- 304: antenna terminal
- 305: digital tuner
- 306: bit stream processing unit
- 307: video signal processing circuit
- 308: panel driving circuit
- 309: display panel
- 310: audio signal processing circuit
- 311: audio amplifier circuit
- 312: speaker
- 321: CPU
- 322: flash ROM
- 323: DRAM
- 324: internal bus
- 325: remote control reception unit
- 326: remote control transmitter
- 400: HDMI cable

## Claims

1. A stereoscopic image data transmission device comprising:
an encoding unit configured to perform encoding as to stereoscopic data including left eye image data and right eye image data, so as to obtain encoded video data;
a superimposing information data generating unit configured to generate data of superimposing information to be superimposed on the image of the left eye image data and right eye image data;
a disparity information output unit configured to output disparity information to provide disparity to the superimposing information to be superimposed on the image of the left eye image data and right eye image data; and
a transmission unit configured to transmit the encoded video data obtained from said encoding unit, the superimposing information data generated at said superimposing information data generating unit, and the disparity information output from said disparity information output unit.

2. The stereoscopic image data transmission device according to Claim 1, wherein an identifier is added to each superimposing information data generated at said superimposing information data generating unit;
and wherein the disparity information of each superimposing information data output from said disparity information data generating unit has added thereto an identifier corresponding to the identifier provided to the corresponding superimposing information data.

3. The stereoscopic image data transmission device according to Claim 1 or Claim 2, said disparity information output unit further including a disparity information determining unit configured to determine said disparity information in accordance with the content of the image of said left eye image data and said right eye image data, for each superimposing information data generated at said superimposing information data generating unit;
wherein the disparity information determined at said disparity information determining unit is output.

4. The stereoscopic image data transmission device according to Claim 3, said disparity information determining unit further including a disparity information detecting unit configured to detect disparity information of one of the left eye image and right eye image as to the other at a plurality of positions within the image, based on said left eye image data and said right eye image data;
and determining, of the plurality of disparity information detected at said disparity information detecting unit, the disparity information detected at a detecting position corresponding to a superimposing position, for each said superimposing information.

5. The stereoscopic image data transmission device according to Claim 1 or Claim 2, said disparity information output unit further including a disparity information setting unit configured to set said disparity information of each superimposing information data generated at said superimposing information data generating unit;
and outputting disparity information set at said disparity information setting unit.

6. The stereoscopic image data transmission device according to Claim 1 or Claim 2, said disparity information output unit further including a disparity information determining unit configured to determine said disparity information in accordance with the content of the image of said left eye image data and said right eye image data, for each superimposing information data generated at said superimposing information data generating unit, and a disparity information setting unit configured to set said disparity information of each superimposing information data generated at said superimposing information data generating unit;
wherein the disparity information determined at said disparity information determining unit and the disparity information determined at said disparity information setting unit are selectively output.

7. The stereoscopic image data transmission device according to Claim 1, wherein said transmission unit includes the disparity information output at said disparity information unit in a user data region of a header portion of a video elementary stream which includes the encoded video data obtained at said encoding unit in a payload portion.

8. The stereoscopic data transmission device according to Claim 1, wherein, at the time of transmitting the disparity information output from said disparity information output unit, said transmission unit one or both of information indicating the superimposition position of said superimposing information and information indicating display time of said superimposing information to said disparity information, and transmits.

9. The stereoscopic image data transmission device according to Claim 1, wherein the data of said superimposing information is character four displaying subtitles or program information.

10. The stereoscopic image Transmission device according to Claim 1, wherein the data of superimposing information is bitmap data for displaying subtitles or graphics.

11. A stereoscopic image data transmission method comprising:
an encoding step to perform encoding as to stereoscopic data including left eye image data and right eye image data, so as to obtain encoded video data;
a superimposing information data generating step to generate data of superimposing information to be superimposed on the image of the left eye image data and right eye image data;
a disparity information output step to output disparity information to provide disparity to the superimposing information to be superimposed on the image of the left eye image data and right eye image data; and
a transmission step to transmit the encoded video data obtained in said encoding step, the superimposing information data generated in said superimposing information data generating step, and the disparity information output in said disparity information output step.

12. A stereoscopic image data reception device comprising:
a reception unit configured to receive encoded video data obtained by encoding stereoscopic image data including left eye image data and right eye image data, data of superimposing information to be superimposed on an image of the left eye image data and right eye image data, and disparity information for providing disparity to said superimposing information to be superimposed on an image of the left eye image data and right eye image data;
a decoding unit configured to perform decoding to encoder video data received at said reception unit so as to obtain Stereoscopic image data; and
an image data processing unit configured to provide disparity to the same superimposing information as that of said superimposing information data received ant said reception unit to be superimposed on an image of the left eye image data and right eye image data, included in the stereoscopic image data obtained at said decoding unit, based on said disparity information received at said reception unit, thereby obtaining data of the left eye image upon which said superimposing information has been superimposed and data of the right eye image upon which said superimposing information has been superimposed.
